(19) Europäisches Patentamt
European Patent Office
Office européen des brevets

(11) EP 2 960 204 B1

(12) EUROPEAN PATENT SPECIFICATION

(45) Date of publication and mention of the grant of the patent:
**13.06.2018 Bulletin 2018/24**

(51) Int Cl.:
***C01B 3/00*** *(2006.01)*

(21) Application number: **15178631.6**

(22) Date of filing: **06.05.2004**

(54) **HYDROGEN STORAGE BY REVERSIBLE HYDROGENATION OF PI-CONJUGATED SUBSTRATES**

WASSERSTOFFSPEICHERUNG DURCH REVERSIBLE HYDRIERUNG VON PI-KONJUGIERTEN SUBSTRATEN

STOCKAGE D'HYDROGÈNE PAR HYDROGÉNATION RÉVERSIBLE DE SUBSTRATS CONJUGUÉS-PI

(84) Designated Contracting States:
**AT BE BG CH CY CZ DE DK EE ES FI FR GB GR HU IE IT LI LU MC NL PL PT RO SE SI SK TR**

(30) Priority: **06.05.2003 US 430246**
**27.04.2004 US 833467**
**27.04.2004 US 833484**

(43) Date of publication of application:
**30.12.2015 Bulletin 2015/53**

(62) Document number(s) of the earlier application(s) in accordance with Art. 76 EPC:
**04751428.6 / 1 660 404**

(73) Proprietor: **AIR PRODUCTS AND CHEMICALS, INC.**
**Allentown, PA 18195-1501 (US)**

(72) Inventors:
- **Pez, Guido Peter**
  **Allentown, Pennsylvania 18103 (US)**
- **Scott, Aaron Raymond**
  **Allentown, Pennsylvania 18104 (US)**
- **Cooper, Alan Charles**
  **Macungie, Pennsylvania 18062 (US)**
- **Cheng, Hansong**
  **Singapore 117543 (SG)**
- **Bagzis, Larry David**
  **Allentown, Pennsylvania 18104 (US)**
- **Appleby, John Bruce**
  **Shade Gap, Pennsylvania 17255 (US)**

(74) Representative: **Parchmann, Stefanie**
**Maiwald Patentanwalts- und Rechtsanwaltsgesellschaft mbH**
**Elisenhof**
**Elisenstraße 3**
**80335 München (DE)**

(56) References cited:
**WO-A2-02/38494 US-A- 5 703 378**

- **KARIYA N ET AL: "Efficient evolution of hydrogen from liquid cycloalkanes over Pt-containing catalysts supported on active carbons under "wet-dry multiphase conditions"", APPLIED CATALYSIS A: GENERAL, ELSEVIER SCIENCE, AMSTERDAM, NL LNKD- DOI:10.1016/S0926-860X(02)00139-4, vol. 233, no. 1-2, 10 July 2002 (2002-07-10), pages 91-102, XP004367106, ISSN: 0926-860X**
- **"Hyforum 2000", September 2000 (2000-09), XP008124399, pages 335-341, * page 335 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 960 204 B1

## Description

### 1. FIELD OF THE INVENTION

This invention relates to processes for the reversible hydrogenation of pi-conjugated substrates to provide for the storage and release of hydrogen at practical operating temperatures and pressures, particularly for supplying hydrogen to fuel cells. Hydrogen is a widely used chemical commodity in the chemical and petroleum processing industries, but with the relatively recent development of fuel cells it is increasingly also being considered as a viable "clean" energy source. Stationary fuel cells can be supplied with hydrogen from on-site natural gas reformers or via existing hydrogen pipeline sources. However, for mobile vehicular systems, a practical and effective method for storing hydrogen to power an on-board fuel cell or a hydrogen fuelled internal combustion engine is required. The transport of hydrogen as a cryogenic liquid, although technologically well established, is an energy-intensive process which results in a significantly higher cost of the delivered gas. Hydrogen is also conventionally transported as a compressed gas in steel cylinders, but the storage capacity is relatively low. Higher gravimetric storage amounts, but at relatively low volumetric densities, can now be achieved with hydrogen gas at very high pressures up to 10,000 psi (690 bar) in light-weight containers made of very high strength composite materials. There are significant energy costs in thus compressing the gas as well as potential issues regarding consumers' acceptance of systems that contain hydrogen at such elevated pressures.

It is thus necessary and highly desirable to devise a means of storing and delivering hydrogen safely, at an adequate gravimetric and volumetric storage density and with a minimal consumption of energy. This may be accomplished by "containing" the hydrogen in a suitable solid, or potentially even in liquid sorbent media, compositions which have a substantial but reversible affinity for the gas. The gas is contacted with the sorbent at modest temperatures and hydrogen pressures and is released for use as required, by lowering the system's hydrogen partial pressure at the same or a higher temperature. Hydrogen uptake by the sorbent is usually an exothermic process, while the release of hydrogen for use requires at least the corresponding input of thermal energy which can be met from the fuel cell's or internal combustion engine's waste heat. Thus, in contrast to compressed hydrogen-based storage systems, the necessary energy needed for containing the hydrogen (i.e. its heat of adsorption) can thus largely be met without significant consumption of higher grade electrical energy for compression.
Also, there is a considerably increased safety factor in a sorbed hydrogen. Since any desorption process is endothermic, it will be naturally self-retarding and the hydrogen will not spontaneously totally desorb without an external input of heat.

### 2. BACKGROUND OF THE INVENTION

The challenge in this sorbent approach to hydrogen storage is in devising the appropriate functioning sorbent media. Much of the research on containing hydrogen in this way has focused on the property of various metals and metal alloys to reversibly chemically combine with hydrogen to form metal hydrides. Representative examples are FeTi; TiV alloys; $LaNi_5$; various magnesium-nickel combinations; and sodium alanate, $NaAlH_4$, which can reversibly dissociate in the presence of some catalysts into Al, NaH and $H_2$. There is a substantial literature on metal hydrides and while research is still being actively pursued in this field for instance on tri- and multi-metal hydrides, demonstrated gravimetric hydrogen capacities are still well short of the 6+ wt % hydrogen that are required for vehicular hydrogen storage.

There have recently been a number of claims of hydrogen storage by various forms of carbon: as single wall nanotubes by A. C. Dillon et al. in Nature 386, 377-379 (1997); and as graphitic nanofibers by Chambers et al. in J. Phys. Chem. B 102, 4253-4256 (1998). However, these and other literature claims of a substantial hydrogen containment by carbons [see A. C. Dillon and M. J. Heben in Appl. Phys. A 72, 133-142 (2001)] have not been specifically confirmed by other investigators; the field of hydrogen sorption by carbons has remained an open area of research. In this context, Cooper and Pez in US 2002/0096048 have reported that intimate combinations of hydrogen reactive metals or metal alloys, or metal hydrides with various forms of substantially graphitic carbon, i.e. carbon-metal hybrids, display a reversible uptake of hydrogen at near ambient conditions and are useful as pressure-swing and temperature-swing sorbents for the storage of hydrogen. The observed reversible facile hydrogen reactivity is theorized to occur either by a "hydrogen-spillover" mechanism or by a partial reversible metal-catalyzed hydrogenation of the unsaturated graphitic carbon structures.

A recent report by S. J. Cho et al. in ACS Fuel Chemistry Division Preprints 47(2), 790-791 (2002) claims the adsorption of hydrogen by the hydrochloric acid-doped conducting polymers polyaniline and polypyrrole. These polymers are exposed to high pressure (1350 psia, 93 bar) hydrogen at 25°C resulting in an apparent slow uptake of hydrogen gas. The hydrogen gas is desorbed by heating the sample to 200°C at an unspecified gas pressure. The authors speculate that the hydrogen is physically adsorbed (ie., the H-H bond remains intact) in the porous conducting polymers. Samples that were not treated with hydrochloric acid, which apparently induces porosity in the polymer samples, did not show any uptake of hydrogen. No metal catalysts are reported to be present in the material and no indication for chemical adsorption of hydrogen or catalytic hydrogenation of the polymer is given in this publication.

The possibility of storing hydrogen via the catalytic hydrogenation and then dehydrogenation of common aromatic molecules such as benzene or toluene has long been disclosed as a means of storing the hydrogen. With a theoretical hydrogen storage capacity of about 7 weight percent, the systems seem attractive. But while this chemistry is performed routinely in chemical plants there are numerous difficulties in utilizing it in a practical hydrogen storage device.

The principal obstacles are as follows:

With the appropriate metal catalysts, the hydrogenation of benzene, toluene, naphthalene and related one or two six-membered ring aromatics to the corresponding saturated cyclic hydrocarbons, cyclohexane, methylcyclohexane and decalin, respectively, can be conducted at relatively mild conditions, e.g. ~100°C and ~100 psi (6.9 bar) of hydrogen pressure, where it is thermodynamically very favorable. However, dehydrogenation of the above cited corresponding alkanes to produce hydrogen gas at the about 20 psia (1.5 bar) and higher delivery pressures that are required for use in fuel cells is, as currently carried out, a highly endothermic process and thus requires the use of higher reaction temperatures that are not easily obtainable from fuel cells, especially those presently used in vehicles, as well as a significant input of energy. Thus, US. 4,567,033 to Kesten et al. describes a method of "freeing" molecular hydrogen from methylcyclohexane by its dehydrogenation to toluene at 316°C, the required thermal input being supplied by a combustion of a considerable portion of the by-product hydrogen.

Additionally, the common one or two six-membered ring aromatic molecules are quite volatile as are their hydrogenated products. While the hydrogenation can be conducted in a closed system, the production of product hydrogen from the reverse reaction fundamentally requires that there be some means of totally separating the gas from the reaction's organic volatile components. While technically possible, this requires a further unit operation which increases the complexity and hence the cost of the hydrogen storage process.

There have been several attempts to provide practical processes for storing hydrogen via a reversible hydrogenation of aromatics. US 6,074,447 to Jensen et al. describes a means of dehydrogenating a hydrocarbon to an aromatic and hydrogen in the presence of a particular iridium-based molecular complex catalyst at preferably 190°C or higher. Specifically described hydrocarbons are methylcyclohexane, decalin, dicyclohexyl, and cyclohexane (for which the corresponding aromatic products are toluene, naphthalene, biphenyl and benzene); there is no mention of any larger hydrogenated hydrocarbons or the polycyclic aromatic hydrocarbons or other pi-conjugated molecules of this invention. Additionally, the envisaged substrates of this prior art are clearly volatile at reaction temperatures and the reaction chamber is thus necessarily provided with a membrane that is highly selective for the passage of hydrogen as compared to the other volatile reaction components which are retained in the reaction chamber.

N. Kariya et al. have recently reported in Applied Catalysis A, 233, 91-102 (2002) what is described to be an efficient generation of hydrogen from liquid cycloalkanes such as cyclohexane, methylcyclohexane and decalin over platinum and other platinum-containing catalysts supported on carbon. The process is carried out at from about 200°C to 400°C under "wet-dry multiphase conditions", which involves intermittently contacting the saturated liquid hydrocarbon with the heated solid catalyst in a way such that the catalyst is alternately wet and dry. Because of local superheating and other cited factors the dehydrogenation reaction is rendered more efficient in terms of improved reaction kinetics but because of the reaction thermodynamics (*vide infra*) it still requires the use of relatively high temperatures for a high conversion of the cyclohexane to the corresponding aromatic molecule. This basic process is elaborated on in several Japanese patent applications (e.g. JP20001110437 and JP2002134141) where it is applied citing benzene, toluene, xylene, mesitylene, naphthalene, anthracene, biphenyl, phenanthrene and their alkyl derivatives as possible aromatic substrates as a means of producing hydrogen for fuel cells. It is evident however, that for this and other implementations of the process, active means for totally separating the product hydrogen from the volatile components of the process need to be employed.

R.O. Loufty and E.M. Vekster, in "Investigation of Hydrogen Storage in Liquid Organic Hydrides", Proceedings of the International Hydrogen Energy Forum 2000, Munich Germany, 2000; pp. 335-340, have reported the dehydrogenation of decalin in a membrane reactor where the very low conversion (~15%) of decalin, even at 300°C, is greatly enhanced by the selective separation of hydrogen by the membrane and its removal from the reactor.

JP2002134141 A describes "liquid hydrides" based on phenyl-substituted silanes; aryl-substituted oligomers and low molecular weight polymers of ethylene; low molecular weight polymers of phenylene; and oligomers of aryl- and vinyl-substituted siloxanes where the aryl groups are phenyl, tolyl, naphthyl and anthracyl group.

In spite of the work described above, there remains a need for processes for the reversible hydrogenation of pi-conjugated substrates to provide for the storage and release of hydrogen at practical operating temperatures and pressures, particularly for supplying hydrogen to fuel cells.

Recyclable liquid fuels that have generated recent interest include liquid aromatic compounds such as benzene, toluene and naphthalene ("the aromatic substrates"), which undergo reversible hydrogenation to form cyclohexane, methylcyclohexane and decalin ("the hydrogenated substrates"), respectively. The hydrogenated substrates are provided to a dehydrogenation system and hydrogen fuel cell where, under suitable conditions, the hydrogenated substrates dehydrogenate to form hydrogen for use by the fuel cell, and the aromatic substrate is recovered. For example, U.S. Patent No. 6,074,447 to Jensen describes dehydrogenating methylcyclohexane, decalin, dicyclohexyl, and cyclohexane

to toluene, naphthalene, biphenyl and benzene, respectively, in the presence of a particular iridium based molecular complex catalyst at preferably 190°C or higher.

An attractive feature of using a hydrogen carrier based on liquid aromatic compounds is that it offers the possibility of using the existing liquid hydrocarbon-fuel infrastructure for hydrogenating, delivering and storing the liquid-phase hydrogen carrier. In contrast, the delivery and storage of hydrogen as either a cryogenic liquid or a compressed gas would require different methods of storage and transportation. In addition, the use of compressed hydrogen would incur considerable energy costs in compressing the gas as well as potential issues regarding consumers' acceptance of systems that contain hydrogen at such elevated pressures.

In principle, liquid hydrogenated substrates are easily transported using conventional methods for liquid transport and distribution (pipelines, railcars, tanker trucks). Likewise, liquid hydrogenated substrates can be delivered to a mobile or stationary fuel cell using a conventional gasoline dispensing nozzle. At the point of use, a dehydrogenation reaction is carried out to generate hydrogen for use by the fuel cell and the dehydrogenated substrate (*i.e*., the aromatic substrate). The aromatic substrate is collected in a recovery tank and is later returned to a hydrogenation facility where it is reacted with hydrogen to regenerate the hydrogenated substrate.

Chem. Eng., 21 (March 2003) describes the use of liquid organic hydrides by hydrogenating benzene and naphthalene to form cyclohexane and decalin, and transporting the hydrogenated compounds to user's site.

A process for delivering hydrogen contained by a liquid substrate ("liquid hydride") to a fuel cell vehicle or a stationary power source using the existing fossil fuel infrastructure is described in G. Pez, Toward New Solid and Liquid Phase Systems for the Containment, Transport and Deliver of Hydrogen," May 2003, (see http://www.eere.energy.gov/hydrogenandfuelcells/pdfs/solid_liquid_carriers_pres_air_pro d.pdf). The Pez reference describes a process where the liquid substrate is hydrogenated at a hydrogenation plant and the resultant liquid hydride is delivered to a multi-vehicle fueling station or stationary power source using existing gasoline or diesel delivery methods. The Pez reference notes that a lightweight mid-size fuel cell vehicle could be driven about 400 miles on 18 gallons of a liquid hydride having a density of about 1 g/cc and containing 6 wt.% of desorbable hydrogen.

S. Hodoshima et al., Int. J. Hydrogen Energy 28: 1255-1262 (2003) describes using decalin and naphthalene as the hydrogenated substrate and aromatic substrate, respectively. The Hodoshima reference further teaches that naphthalene could be hydrogenated with hydrogen generated by electrolysis of water using renewable energy sources such as windpower.

E. Newsome et al., Int. J. Hydrogen Energy 23: 905-909 (1998) describes using methylcyclohexane and toluene as the hydrogenated substrate and aromatic substrate, respectively, and further teaches that the liquid hydride could be formed and stored in summer months for use in winter months.

## 3. BRIEF SUMMARY OF THE INVENTION

The present invention provides a means of capturing and thereby storing hydrogen by its chemical reaction, conducted at moderate temperatures, in the presence of a catalyst, with a substrate having an extended pi-conjugated molecular structure as defined herein to yield the corresponding substantially hydrogenated form of the pi-conjugated system. As used herein, hydrogenate, including in its various forms, means to add hydrogen to saturate unsaturated bonds, and does not include hydrogen cleavage of molecules or hydrogenolysis (ie., breaking of carbon-carbon or carbon-heteroatom linkages). A delivery of the stored hydrogen is accomplished simply by reducing the pressure of hydrogen, and/or raising the temperature, both of which promote the corresponding dehydrogenation reaction.

In one embodiment, the pi-conjugated substrates of our invention can be reversibly catalytically hydrogenated at milder reaction conditions and with a lesser expenditure of energy than those of the prior art, i.e. principally benzene, toluene and naphthalene. The extended pi-conjugated substrate and its hydrogenated derivative are for the most part relatively large molecules, and are therefore relatively involatile, thus being easily separable from the product hydrogen stream. While a high degree of hydrogenation and dehydrogenation is advantageous to be an effective and practical hydrogen storage system, at least partial hydrogenation and dehydrogenation, preferably wherein the reversible hydrogen uptake of the extended pi-conjugated substrate is at least 1.0 % of by weight of the at least partially hydrogenated substrate, yields an effective and practical hydrogen storage economy.

As demonstrated herein by quantum mechanics based thermodynamics calculations and supporting experimental data, a reversible hydrogenation of extended pi-conjugated aromatic molecules is generally thermodynamically more favorable; it can be carried out at a lower temperature than is possible with the commonly used as cited in Section 2, one, two, or three six-membered ring aromatic substrates of the prior art. Essentially, the modulus of the heat or enthalpy of the (exothermic) hydrogenation reaction and of the (endothermic) dehydrogenation step is reduced, thus resulting in a hydrogenation/dehydrogenation system which is more easily reversible at modest and practical temperatures. An added advantage of using the extended pi-conjugated substrates is that they and their hydrogenated derivatives are far less volatile, thus precluding the need for a separate unit operation for totally separating these from the product hydrogen thus greatly simplifying the overall hydrogen storage equipment and its process of operation.

The details of the invention are set forth in the accompanying figures, detailed description and examples below.

## 4. BRIEF DESCRIPTION OF SEVERAL VIEWS OF THE DRAWINGS

Fig. 1 is a comparison of the enthalpy change for hydrogenating three "isolated" double bonds, exemplified by three molecules of cyclohexene, to cyclohexane and of hydrogenating benzene to the same product. $\Delta H_3$ is the pi-conjugation or resonance stabilization energy for benzene.

Fig. 2 shows the enthalpy changes, $\Delta H°$, associated with the formation of conformers as exemplified by the hydrogenation of naphthalene to *cis*- and *trans*-decalin.

Fig. 3 shows the hydrogenation reaction enthalpies, $\Delta H^{o}_{H2}$ at standard conditions (25°C, 1 atm.) for the numbered hydrogenation/dehydrogenation reaction systems, as identified in Table 1. Calc. = calculated using the *ab initio* DFT density functional theory method; Exp. = published experimental data. *Calculated and experimental data at 150°C.

Fig. 4 shows the hydrogenation of certain extended pi-conjugated substrates where all of the unsaturated linkages of the pi-unsaturated substrate have been hydrogenated.

Fig. 5 shows the calculated dehydrogenation temperature for a 95.24% equilibrium conversion of the saturated, fully hydrogenated carrier molecule, A-$H_2$n back to the pi-conjugated substrate, A, at 1 atm. $H_2$ pressure, i.e., where K of Equation 3 is 0.05 atm.$^{-n}$. Calc. = calculated using the *ab initio* DFT density functional theory method; Exp. = calculated from experimental data. The numbers refer to the hydrogenation substrate shown in Tables 1a-1d. *Calculated using our experimental enthalpy data (Example 13) and computationally derived entropy values.

Fig. 7 is a plot of the calculated standard enthalpies of hydrogenation $(\Delta H^{o}_{H2})$ for two isostructural series of polyaromatic hydrocarbons, with and without nitrogen substitution, as a function of the number of fused aromatic rings (the representations of double bonds, or aromatic sextets, have been omitted for simplicity). The PM 3 method was used for the calculation.

Fig. 13 is a plot for 5 consecutive cycles of the hydrogen desorption vs. time of a sample (Example 10) of N-ethylcarbazole with ruthenium on lithium aluminate and palladium on lithium aluminate catalysts.

Fig. 14 is a plot of the hydrogen desorption vs. time of a sample (Example 11) of N-ethylcarbazole with palladium on lithium aluminate catalyst.

Fig. 15 is a schematic of a continuous flow dehydrogenation reactor (Example 12).

Fig 16 is a plot of the hydrogen desorption at 180°C vs. time of a sample (Example 15) of 1-ethyl-2-methylindole with palladium on alumina catalyst.

Fig 17 is a plot of the hydrogen desorption at 160°C vs. time of a sample (Example 15) of 1-ethyl-2-methylindole with palladium on alumina catalyst.

## 5. DETAILED DESCRIPTION OF THE INVENTION

### 5.1 STORAGE OF HYDROGEN USING PI-CONJUGATED SUBSTRATES

Provided herein is a process for the storage of hydrogen by its reversible chemical reaction with extended pi-conjugated substrates. It may be performed with extended pi-conjugated molecular structures as herein defined and with reaction parameters, as illustrated by the following computational and experimental examples.

Pi-conjugated (often written in the literature using the Greek letter $\Pi$) molecules are structures which are characteristically drawn with a sequence of alternating single and double bonds. But this representation of the chemical bonding is only a means of recognizing such molecules by their classical valence bond structures. It does not alone provide a description of their useful properties in the context of this invention for which concepts of modern molecular orbital theory of bonding need to be invoked.

In molecular orbital theory, the classically written single bond between two atoms is referred to as a $\sigma$-bond,

and arises from a bonding end-on overlap of two dumbbell shaped "p" electron orbitals. It is symmetrical along the molecular axis and contains the two bonding electrons. In a "double" bond, there is, in addition, a side-on overlap of two "p" orbitals that are perpendicular to the molecular axis and is described as a pi-bond (or "Π-bond"). It also is populated by two electrons but these electrons are usually less strongly held, and more mobile. A molecule that comprises (is depicted as) a sequence of alternating single and double bonds is described as a "pi-conjugated system" in the sense that the pi-electrons of the double bonds can be delocalized over this sequence for the entire molecule. The consequence of this is that the pi-conjugated molecule has a lower overall energy, i.e. is more stable than if its pi-electrons were confined to or localized on the double bonds. This is well evident experimentally in the simplest pi-conjugated system, *trans*-1,3-butadiene. The heat (enthalpy) change at standard conditions (1 atm. pressure, 25°C) for hydrogenating the two double bonds to yield butane is -56.24 kcal/mole as compared to a total of -60.06 kcal/mole for hydrogenating two molecules of 1-butene to the same end product. Thus, 1,3-butadiene is more stable by 3.82 kcal/mol because of the internal conjugation, as evidenced by the lower modulus (absolute value) of the negative enthalpy of hydrogenation. As illustrated in Fig. 1, a much larger stabilization from pi-conjugation of 35.6 kcal/mol can be calculated in the same way for benzene compared to cyclohexane and is referred to as its aromatic stabilization energy.

The practical consequence of this additional stability that can be achieved with extended pi-conjugated substrates is that it brings these closer in energy to their corresponding saturated or fully hydrogenated derivatives, i.e. minimizing $\Delta H_2$ in Fig. 1 thus making possible hydrogen storage via catalytic hydrogenation/dehydrogenation processes that are more easily reversible at mild temperatures and are less energy intensive.

This concept can be quantified in terms of the basic thermodynamic parameters, enthalpy (ΔH), entropy (ΔS), Gibbs free energy (ΔG), and the equilibrium constant K, for the reversible hydrogenation reaction of substrate A to A-$H_{2n}$:

$$A + nH_2 \xleftrightarrow{K} A - H_{2n} \text{------ (1)}$$

by the familiar thermodynamic relationship:

$$\Delta G = -RT\ln K = \Delta H - T\Delta S \text{------(2)}$$

where R is the ideal gas constant, T is the reaction temperature (in degrees Kelvin) and where

$$K = [A\text{-}H_{2n}]/[A]P^{n}_{H2} \text{-------(3)}$$

where the terms in [] refer to concentration or partial pressure of A and A-$H_{2n}$ and $P_{H2}$ designates the hydrogen partial pressure.

The enthalpy change (ΔH) for hydrogenation of A to A-$H_{2n}$ at the standard state of 25°C and 1 atm. $H_2$ will henceforth be referred to as $\Delta H^{o}_{H2}$. Unless otherwise indicated experimentally derived and computational $\Delta H^{o}_{H2}$ data herein refers to compositions in their standard state as gases at 1 atm., 25°C. The most common highly conjugated substrates are the aromatic compounds, benzene and naphthalene. While these can be readily hydrogenated at, e.g., 10-50 atm. at $H_2$ at ca 150°C in the presence of appropriate catalysts, the reverse reaction - an extensive catalytic dehydrogenation of cyclohexane and decahydronaphthalene (decalin) at about 1 atm. $H_2$ is only possible at much higher temperatures (*vide infra*). For a practical $H_2$, storage system it is desirable to have the dehydrogenation provide $H_2$ at 1-3 atm. at ca 200°C for potential use in conjunction with a hydrogen internal combustion engine and preferably at lower temperatures, e.g., 80°C-120°C, where present day PEM fuel cells operate. The lower dehydrogenation temperatures are also desirable for maintaining the reacting system in a condensed state (solid or preferably liquid) and minimizing coking and other problems that are often encountered in higher temperature catalytic dehydrogenation reactions.

For the hydrogenation of benzene to cyclohexane, a system which has been described in the prior art for hydrogen storage, the experimental enthalpy change at standard conditions (1 atm. pressure gas, 25°C), ΔH°, is -16.42 kcal/mol $H_2$; ΔG at 80°C is -6.17 kcal/mol $H_2$, with a corresponding K=2.91 x $10^{11}$ atm.$^{-1}$ and approaches a zero value only at about 280°C (where K = 1.1 atm$^{-3}$). As shown in Fig.5, the temperature required for a 95.24% conversion of cyclohexane to benzene (**1**), at equilibrium (K = 0.05) for this system at 1 atm . $H_2$ is 319°C (Table 1a).

For the hydrogenation of naphthalene (liquid), $C_{10}H_8$, to *cis*- decalin (liquid), $C_{10}H_{18}$, (which has also been investigated as a hydrogen storage system), the experimental ΔH°= -15.13 kcal/mol $H_2$ and ΔG at 80°C is -4.87 kcal/mol $H_2$ and approaches zero only at about 235°C (where K = 0.8 atm.$^{-1}$). The temperature for 95.24% conversion of naph-

thalene, $C_{10}H_8$, to *cis*- decalin $C_{10}H_{18}$, at equilibrium (K = 0.05) for this system at 1 atm. $H_2$ is 319°C (see Table 1a, **2**). Therefore, it is very clear that with the reversible hydrogenation systems of the prior art, a recovery of hydrogen that is stored by hydrogenation will only be possible at quite elevated temperatures. And in addition, as noted earlier, these prior art systems all comprise highly volatile components, which would require another unit operation for their separation from hydrogen.

Described here are extended pi-conjugated substrates which can advantageously be reversibly hydrogenated at much milder conditions than for benzene and naphthalene and are not appreciably volatile, thus precluding the need of a complex separation process for the evolved recovered hydrogen. In one embodiment, these hydrogenated extended pi-conjugated substrates can be dehydrogenated at temperatures below 250ºC while at hydrogen partial pressures of greater than 1.449 psia (0.1 bar) and even at pressures in excess of 14.49 psia (1.0 bar) as will be shown by the examples. This is highly unexpected since temperatures required to effect dehydrogenation increase significantly with increasing hydrogen partial pressures. An added advantage of the extended pi-conjugated substrates of this invention is the relative involatility of the substrate, both in hydrogenated and dehydrogenated states, as this eases the separation of the released hydrogen for subsequent usage.

In another embodiment, these hydrogenated extended pi-conjugated substrates can be dehydrogenated at temperatures below 300°C while at hydrogen partial pressures of greater than 1.449 psia (0.1 bar) and even at pressures in excess of 14.49 psia (1.0 bar) as will be shown by the examples.

Equations 2 and 3 fully define the thermodynamic boundaries for the reversible hydrogenation of substrate, A in Equation 1. The enthalpy and entropy change terms for Equation 1, $\Delta H$ and $\Delta S$, respectively, are arrived at from the corresponding experimentally or computationally derived thermodynamic functions for the reaction components, A, $A\text{-}H_{2n}$ and hydrogen. Temperature and hydrogen pressure are process parameters, which for a set of values of $\Delta H$ and $\Delta S$, may be chosen for attaining at reaction equilibrium a high conversion of A to $A\text{-}H_{2n}$: for example, $[A\text{-}H_{2n}]/[A]>20$ for the $H_2$ storage step and conversely $[A\text{-}H_{2n}]/[A]<0.05$ for the reverse reaction. Given $\Delta H$ and $\Delta S$ information for pi-conjugated systems, it should therefore be possible to select a suitable hydrogenation substrate and design an $H_2$ storage and delivery process. Unfortunately, such data is only available for very few systems, i.e., benzene, naphthalene, pyridine, pyrrole, and the corresponding perhydrogenated molecules (cf. Tables 1a and 1b). We have noticed from an analysis of the available data (and confirmed by subsequent calculations) that for the hydrogenation of aromatic substrates, $\Delta S$ which is largely representative of the loss of the translational entropy of the hydrogen molecule, is close to -30 cal/deg. mole of $H_2$. The enthalpy change, $\Delta H$ (expressed as kcal/mol $H_2$) in Equation 1, is therefore the quantity that mostly determines for pi-conjugated substrates the reversibility of this chemistry at specified hydrogenation and dehydrogenation process parameters. Since $\Delta H$ varies only slightly with temperature, $\Delta H°$, the enthalpy change for the reaction with all components at their standard state (1 atm., 25°C), is employed here as a first-order indication of the reversibility and hence the usefulness of a given hydrogenation/dehydrogenation reaction system for $H_2$ storage and delivery.

In one embodiment, the invention relates to a practical hydrogen storage device that operates via a reversible hydrogenation of a pi-conjugated system for which the change in enthalpy at standard conditions (referred to hereinafter as $\Delta H^{o}_{H2}$, standard conditions being 25°C and 1 atm.) of hydrogenation of the substrate is less than -15.0 kcal/mol $H_2$, (a range of hydrogenation enthalpy changes that does not encompass the $\Delta H^{o}_{H2}$ for benzene or the $\Delta H^{o}_{H2}$ for naphthalene to their corresponding hydrocarbons). Substrates having a lower modulus (absolute value) of the negative standard enthalpy change of hydrogenation, will be the more easily dehydrogenated. The modulus of $\Delta H^{o}_{H2}$ is designated henceforth as $|\Delta H^{o}_{H2}|$. Substrates with $|\Delta H^{o}_{H2}|$ <-15.0 kcal/mol $H_2$ will be the more easily dehydrogenated.

In another embodiment, the invention relates to a practical hydrogen storage device that operates via a reversible hydrogenation of a pi-conjugated system, the change in enthalpy at standard conditions of hydrogenation of the substrate as determined experimentally is within the range of-7.0 to-20.0 kcal/mol $H_2$.

The hydrogenation of the pi-conjugated substrate molecule may in some cases yield more than one product of the same overall chemical composition. There may be found structural isomers or conformers of the product molecule that differ only in the relative disposition of its carbon-hydrogen bonds or of other atoms or groups of atoms in the molecule. The conformers will each have different energies (standard heats of formation, $\Delta H°_f$), the thermodynamically most stable conformer having the lowest $\Delta H°_f$. This occurs in the hydrogenation of naphthalene, which can result in the formation of the two conformers, both saturated molecules, *cis*- decalin and trans-decalin, which as illustrated by Fig. 2, differ in the relative disposition of the two C-H linkages, along the common carbon-carbon bond. Commercial decalin contains a 67:33 distribution of *cis* and *trans* conformers, the latter where the C-H bonds are on opposite sides of the common C-C linkage, is more stable by *ca.* 3 kcal/mol. Larger, fully hydrogenated pi-conjugated molecules and particularly

those containing nitrogen heteroatoms can potentially have a myriad of conformers which may differ in energy (ΔH°) by several kcal/mol vis-à-vis the most stable conformer. In practice, the formation of conformers will depend on the conditions at which the catalytic hydrogenation of the pi-conjugated substrate is carried out; lower hydrogenation reaction temperatures favoring the least stable conformer molecules. As is clear from the illustration for naphthalene in (Fig. 2), the formation of such non-equilibrium conformers provides a means of desirably lowering the hydrogenation enthalpy $\Delta H^{o}_{H2}$ of the pi-conjugated unsaturated molecule, by now making its hydrogenation product less stable, thus enabling the dehydrogenation process to occur at a lower temperature. There may also be in some cases, depending on the catalytic dehydrogenation mechanism, the additional advantage of a kinetically more facile dehydrogenation of the more energetic non-equilibrium conformers.

### 5.1.1 THERMODYNAMIC CALCULATIONS

A difficulty in defining suitable pi-conjugated substrates for hydrogen storage is that experimentally derived hydrogenation enthalpy change data is available only for relatively small pi-conjugated molecules. Our basis for defining the following classes of extended pi-conjugated substrates suitable for the reversible hydrogenation/dehydrogenation processes of our invention is in terms of their enthalpy of hydrogenation as derived from quantum mechanical (QM) calculations. The calculations were done at two levels of theory: 1) Using the PM3 (Parametric Method 3) semi-empirical QM algorithm for a prediction of ΔH° for the hydrogenation reaction expressed by Equation 1; and 2) employing an *ab initio* ("from the beginning") QM algorithm that utilizes density functional theory (DFT) which allowed a prediction of both ΔH and ΔS for the hydrogenation reaction at any temperature without input of experimental data. For a review of these computational techniques, see "Computational Chemistry - A Practical Guide for Applying Techniques to Real World Problems" by D. Young, Wiley - Interscience, NY, 2001.

#### 5.1.1.1 THERMODYNAMIC CALCULATIONS CARRIED OUT USING THE SEMI-EMPIRICAL PM3 ALGORITHM

The PM3 method was implemented using the commercial software program package Spartan 02 and Spartan 04 by Wavefunction Inc., Irvine, CA. In performing the calculations, all structures were first fully optimized in their molecular geometry by an energy minimization procedure. The conformation of the hydrogenated species was carefully chosen so that the adjacent hydrogen atoms are present alternatively at opposite sides of the aromatic planes; the ultimate criteria being a selection of the conformer of lowest energy. It is known that PM3 incorrectly yields the heat of formation for the $H_2$ molecule. However, by replacing it with the experimental value of the heat of formation for $H_2$ at its standard state, we obtain the value of heat of reaction at standard conditions, ΔH°, for hydrogenation that is in fair agreement with the available experimental data. For example, for hydrogenation of benzene (gas) to cyclohexane (gas), the calculated value of ΔH° is -18.16 kcal/mol $H_2$ (exp. -16.42 kcal/mol $H_2$); for hydrogenation of naphthalene (gas) to trans-decalin (gas), the calculated value is -17.03 kcal/mol $H_2$ (exp. -15.96 kcal/mol $H_2$). While a similar level of accuracy was also found for other all carbon-hydrogen only aromatic compounds, the technique appears to be somewhat less satisfactory when applied to compounds with nitrogen or other hetero atoms for which the *ab initio* DFT method is much more reliable (see below). Nevertheless, PM3 works satisfactorily for providing the correct trend of $\Delta H^{\circ}_{f}$ values over a range of similar molecules. And it is the only method available for very large systems (> seven five- or six-membered rings) where the computational cost for the more sophisticated and higher precision *ab initio* methods would be impractical. Therefore we have only used the PM3 method for calculating ΔH° of hydrogenation for the series of polyaromatic hydrocarbons (Figs. 6 and 7) which comprise relatively larger molecules (greater than seven five- or six-membered rings) for which the computational cost of the *ab initio* DFT methodology would be prohibitive.

#### 5.1.1.2 THERMODYNAMIC CALCULATIONS CARRIED OUT USING THE *AB INITIO* DENSITY FUNCTIONAL THEORY COMPUTATIONAL APPROACH

In the *ab initio* DFT computational approach, the molecular geometry is as before carefully selected to ensure that the lowest energy conformer has been chosen. The final geometry optimization is carried out using the B3LYP functional with a 6-311G** or higher basis set (see Chapter 5 and 10, respectively in the above "Computational Chemistry" reference). This calculation also provides the electronic energy, E of the molecule. The molecule's normal vibrational frequencies are estimated using the harmonic oscillator approximation, derived from the second derivative of the energy. The frequencies are a measure of the vibrational energy of the molecule from which using standard methods of statistical mechanics, treating the molecule as an ideal gas, the total vibrational enthalpy, Hv and entropy, Sv are determined as a function of temperature. Rotational and translational contributions to the enthalpy ($H_R$, $H_T$) and entropy ($S_R$, $S_T$) and the external energy of the molecule (RT where R is the gas constant) are also included. In summary, the enthalpy change, ΔH for the hydrogenation of substrate A to A-$H_{2n}$ (Equation 1) is given by:

$$\Delta H = \Delta E + sHv(A\text{-}H_{2n}) - sHv(A) - [Hv(H_2)+H_R(H_2)+H_T(H_2)+RT]\text{-------}(4)$$

The harmonic oscillator approximation is known to result in an over-estimate of the vibrational frequencies and thus the vibrational enthalpy, $H_v$. This situation is commonly remedied (see "Computational Chemistry Chapter 11") by modifying the calculated $H_v$'s for the organic molecules by the scaling factor s, which for a hydrogenation of aromatic molecules we have empirically determined as 0.8. This as described *ab initio* computational method provides hydrogenation enthalpies, $\Delta H°$ which agree well (within + 1 kcal/mol $H_2$) with available experimental data (cf. Table 1data for benzene (**1**), naphthalene (**2**$_{\mathbf{cis}}$, **3**$_{\mathbf{trans}}$), etc.). The entropy change for hydrogenation, $\Delta S$ is given by:

$$\Delta S = S(A\text{-}H_{2n}) - S(H_v) - [S_v(H_2)+S_R(H_2)+S_T(H_2)]\text{---------}(5)$$

In practice, for the hydrogenation of pi-unsaturated compounds the translational entropy for hydrogen, $S_T(H_2)$, largely predominates and as assumed earlier, $\Delta S_{H2}$ at standard condition for many systems is close to -30 cal/deg. mol. The thus estimated values of $\Delta H$ and $\Delta S$ along with Equations 2 and 3 were used to estimate the temperature at which 95.24% of the hydrogenated carrier, $A\text{-}H_{2n}$ would be converted back to the pi-unsaturated substrate, A, at 1 atm. of $H_2$, i.e., where $K= [A\text{-}H_{2n}]/[A]$ (Equation 3) at reaction equilibrium at this temperature and $H_2$ pressure is equal to 0.05 $atm^{-n}$. The corresponding temperatures for selected carriers were estimated from published experimental data (where available, e.g., the NIST Standard Reference Database No. 69 (March 2003)) using the HSC5 Chemistry for Windows software program package (Outokumpu Research, Finland). The thus calculated dehydrogenation temperature results using (a) the specific above described *ab initio* DFT method and (b) experimental data (where available, including the NIST database) is collected in Fig. 5 for a number of pi-conjugated substrates.

Experimentally determined values for the hydrogenation enthalpies can be obtained from measuring the heat of combustion of hydrogenated and dehydrogenated substrates to products of known thermodynamic properties (i.e., $CO_2$, $H_2O$, NO, or $N_2$) using known in the art or methods as described in Example 13 of the present application.

For the purposes of this description and the claims, "extended pi-conjugated substrates" are defined to include extended pi-conjugated substrates with nitrogen heteroatoms, pi-conjugated monocyclic substrates with multiple nitrogen heteroatoms, or any combination of two or more of the foregoing. These classes are further defined below, and embodiments of species falling within these classes are provided.

In one embodiment, the modulus of the standard enthalpy change of hydrogenation of the extended pi-conjugated substrate, $|\Delta H^o_{H2}|$, to their corresponding saturated counterparts (e.g., the at least partially hydrogenated extended pi-conjugated substrates) is less than 15.0 kcal/mol $H_2$ as determined experimentally (e.g., by combustion methods described above) or by the above-described *ab initio* DFT method. Accordingly, such molecules would therefore be suitable as reversible hydrogenation substrates for storing hydrogen according to this invention.

The $\Delta H^o_{H2}$ reaction enthalpies in Fig. 3, Tables 1a-1b and the dehydrogenation temperature data (Fig. 5) provide an instructive and useful classification of pi-conjugated substrates in terms of their suitability for hydrogen storage. Referring to the "Exp." column of data in Fig. 3, for the substrates/reaction systems 1, 2, 3, and 5 (respectively; benzene/cyclohexane; naphthalene/cisdecalin; naphthalene to trans-decalin and pyridine to pyrimidine) the modulus of $\Delta H^o_{H2}$ is greater than 15 kcal/mole, at least for the first three of these systems which have been touted in the prior art for $H_2$ storage. The molecules (**1**, **2**, **3**, and **5**) also fit under this classification on the basis of $\Delta H^o_{H2}$ data as calculated by *ab initio* DFT method, for which the agreement (within 1 kcal/mol $H_2$) with the experimentally derived data is excellent.

With confidence in the precision of *ab initio* DFT method we claim the use of pi-unsaturated substrates of this invention molecules for which the modulus of $\Delta H^o_{H2}$ is less than 15 kcal/mol $H_2$. Referring now to Fig. 5: On the basis of both experimental and *ab initio* DFT method calculations, the hydrogenated forms of molecules **1** to **5** are expected to be at equilibrium, ca. 95% in the dehydrogenated form at above 240°C, which is indicated by the horizontal dotted line at 1 atm. $H_2$ pressure. The fully hydrogenated reaction systems of this invention as exemplified in Fig. 5 by pi-conjugated substrates 6 to 19 are expected to undergo a ca. 95% dehydrogenation under 1 atm. $H_2$ at temperatures below 250°C. Surprisingly, some of these molecules are predicted to dehydrogenate even below 100°C (this would also require appropriately reactive catalysts).

In another embodiment, we claim the use of pi-unsaturated substrates of this invention for which the modulus of $\Delta H^o_{H2}$ is less than 20 kcal/mol $H_2$.

While the extended pi-conjugated substrates useful for reversible hydrogenation in accordance with this invention are represented as the unhydrogenated form of the substrate molecule, the actual substrate subjected to hydrogenation may already have some degree of hydrogenation. For purposes of the hydrogenation/dehydrogenation cycle to store and release hydrogen and to re-hydrogenate the substrate, the extended pi-conjugated substrate may exist and be cycled between different levels of full or partial hydrogenation and dehydrogenation as to either the individual molecules or as to the bulk of the substrate, depending upon the degree of conversion of the hydrogenation and dehydrogenation reactions. The levels of hydrogenation and dehydrogenation of the starting extended pi-conjugated substrate and the at least partially hydrogenated extended pi-conjugated substrate will be selected to provide the requisite level of hydrogen storage and release under practical operating conditions and requirements. The substrates useful according to this invention may also have various ring substituents, such as -n-alkyl, -branched-chain alkyl, -alkoxy, -nitrile, -ether and -polyether, which may improve some properties such as melting temperature of the substrate while at the same time not adversely interfering with the hydrogenation/dehydrogenation equilibrium but due to the increased weight resulting in some loss of hydrogen storage capacity of the substrate. Preferably, any of such substituent groups would have 12 or less carbons. As discussed below in the section on "Pi-conjugated Substrates with Multiple Nitrogen Heteroatoms" alkyl substituents (and it's expected that also alkoxy substituents) will actually favorably slightly lower the modulus of the heat of hydrogenation, $\Delta H^{o}_{H2}$.

### 5.1.2 EXTENDED PI-CONJUGATED SUBSTRATES

Classes of extended pi-conjugated substrates suitable for the processes of this invention are further and more specifically defined as follows:

**Extended Pi-conjugated Substrates with Nitrogen Heteroatoms.** For purposes of this description and invention, "extended pi-conjugated substrates with nitrogen heteroatoms" are defined as those N-heterocyclic molecules having (1) a five-membered cyclic aromatic hydrocarbon containing a nitrogen atom in the five membered aromatic ring; or (2) a six-membered cyclic aromatic hydrocarbon containing a nitrogen atom in the six membered aromatic ring; wherein the N-heterocyclic molecule is fused to at least one six-membered aromatic sextet structure which may also contain a nitrogen heteroatom.

Pyridine is known to have a greater aromatic stabilization energy than benzene and hence a lower $\Delta H^{o}_{H2}$ (Table 1). We have found that an introduction of N heteroatoms (i.e., replacing carbons) in polycyclic aromatic hydrocarbons also generally results in a lower modulus (absolute value) of the standard enthalpy of hydrogenation, $\Delta H^{o}_{H2}$, i.e. a higher aromatic (or pi-conjugation) stabilization energy than their corresponding all carbon counterparts. This trend is illustrated in Fig. 7 where it should be noted that the $H^{o}_{H2}$ data was calculated using the PM3 method which, although less precise than DFT does correctly show the relative trend of hydrogenation enthalpies as validated both by the more precise DFT calculations for some of the smaller molecules (cf. Tables 1a and 1b). The substitution of a nitrogen heteroatom for a carbon atom in a six membered sextet structure ring results in retention of the sextet structure. We have observed an even more remarkable decrease in standard enthalpy of hydrogenation, ΔH°, for the staggered ("armchair") linear polyaromatic hydrocarbon with the substitution of one N heteroatom per aromatic ring. For the series of staggered ("armchair") linear polyaromatic hydrocarbon from 3 to 14 rings, (Curves III and IV in Fig. 7) there is an approximately 3.5 kcal/mol $H_2$ less negative (PM3 calculated) $\Delta H^{o}_{H2}$ when one of the carbon atoms per ring is replaced by a nitrogen atom. And once again, we have observed that the overall external "shape" of the molecule can greatly affect the standard enthalpy of hydrogenation, ΔH°. The N heteroatom polycyclic hydrocarbons that contain the greatest number of pyridine-like aromatic sextets will be the most preferred structure and have the lowest modulus of the standard enthalpy of hydrogenation $\Delta H^{o}_{H2}$ structures. The incorporation of two N atoms in a six membered ring (i.e., replacing carbons) provides an even further advantage, the effect on $\Delta H^{o}_{H2}$ depending on the nitrogens' relative positional substitution pattern. A particularly germane example is provided by 1,4,5,8,9,12-hexaazatriphenylene, $C_{18}H_6N_6$,

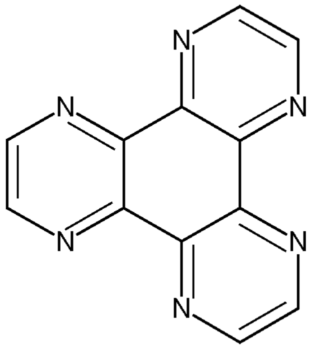

,

and its perhydrogenated derivative, $C_{12}H_{24}N_6$ system

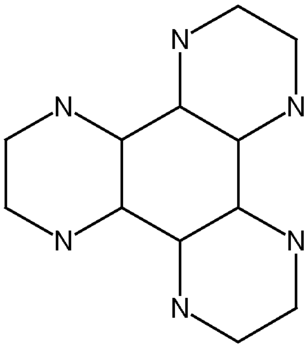

for which the (DFT calculated) $\Delta H^{o}_{H2}$ of hydrogenation is -11.5 kcal/mol $H_2$ as compared to the (DFT calculated) $\Delta H^{o}_{H2}$ of hydrogenation of -14.2 kcal/mol $H_2$ for the corresponding all carbon triphenylene, perhydrotriphenylene system. Another representative example is pyrazine[2,3-b]pyrazine:

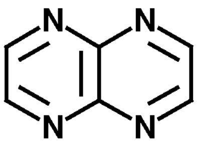

where the (DFT calculated) of $\Delta H^{o}_{H2}$ of hydrogenation is -12.5 kcal/mol $H_2$. This is substantially lower than the DFT calculation of $\Delta H°$ of hydrogenation for all carbon naphthalene (-15.1 kcal/mol $H_2$ for *cis*- decalin and -15.8 kcal/mol $H_2$ for trans-decalin) due to the presence of the four nitrogen atoms in the ring systems.

Pi-conjugated aromatic molecules comprising five membered rings substrate classes identified above and particularly where a nitrogen heteroatom is contained in the five membered ring provide the lowest potential modulus of the $\Delta H^{o}_{H2}$ of hydrogenation of this class of compounds and are therefore effective substrates for hydrogenation/dehydrogenation according to this invention. An experimental example of this is provided by carbazole,

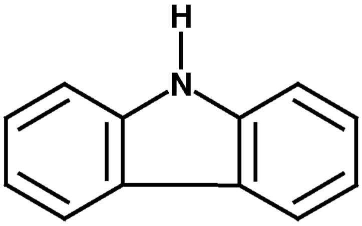

in Example 7, for which the (DFT calculated) ΔH° of hydrogenation = -12.2 kcal/mol $H_2$; and N-alkylcarbazoles such as N-ethylcarbazole

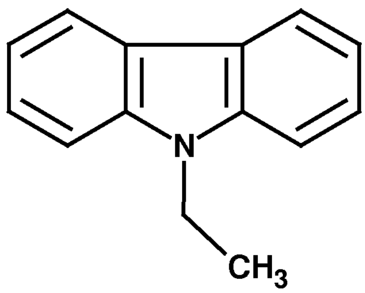

which has a (DFT calculated) $\Delta H^{o}_{H2}$ of hydrogenation of -12.1 kcal/mol $H_2$ and an experimentally measured average $\Delta H^{o}_{H2}$ of hydrogenation (Example 13) that ranges between -11.8 and -12.4 kcal/mol $H_2$.

Other examples of polycyclic aromatic hydrocarbons with a nitrogen heteroatom in the five-membered ring fitting this class include the N-alkylindoles such as N-methylindole, 1-ethyl-2-methylindole (see **21** in Table 1b); N-alkylcarbazoles such as N-methylcarbazole and N-propylcarbazole; indolocarbazoles such as indolo[2,3-b]carbazole (see **12** in Table 1b) and indolo[3,2-a]carbazole; and other heterocyclic structures with a nitrogen atom in the 5- and 6-membered rings such as N,N',N"-trimethyl-6,11-dihydro-5H-diindolo[2,3-a:2',3'-c]carbazole (see **42** in Table 1b), 1,7-dihydrobenzo[1,2-b:5,4-b']dipyrrole (see **14** in Table 1b), and 4H-benzo[def]carbazole (see **30** in Table 1b). All of these compounds have $|\Delta H^{o}_{H2}|$ values that are less than 15 kcal/mol $H_2$ with molecules of this class that contain multiple hetero nitrogen atoms (see, e.g., **43, 41** and **19** in Table 1b)) having a $|\Delta H^{o}_{H2}|$ that is even less than 11 kcal/mol $H_2$.

The extended pi-conjugated substrates with nitrogen heteroatoms also comprise structures having ketone a group in the ring structure, wherein the ring structure with the ketone group is fused to at least one carbon ring structure which is represented as an aromatic sextet. An example of such structure is the molecule flavanthrone, a commercial vat dye,

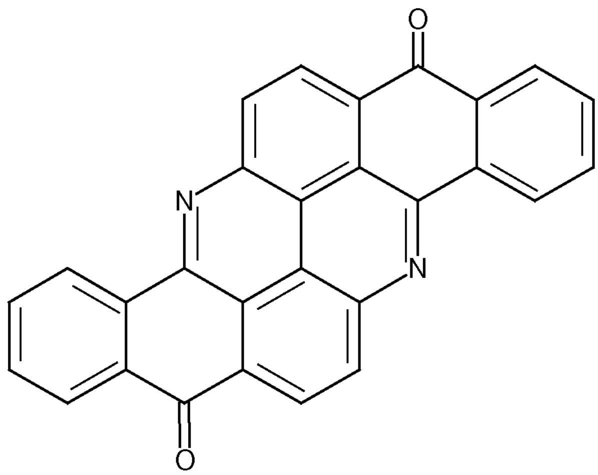

a polycyclic aromatic that contains both nitrogen heteroatoms and keto groups in the ring structure, and has a favorable (PM3 calculated) ΔH° of hydrogenation of -13.8 kcal/mol $H_2$ for the addition of one hydrogen atom to every site including the oxygen atoms.

Extended pi-conjugated substrates with nitrogen heteroatoms are available from Aldrich Chemical, Lancaster Synthesis and Across, or can be prepared by known methods (see Tetrahedron 55, 2371 (1999) and references therein)

**Pi-conjugated monocyclic substrates with multiple nitrogen heteroatoms.** For the purposes of this description and the claims, "pi-conjugated monocyclic substrates with multiple nitrogen heteroatoms" are defined as those molecules having a five-membered or six-membered aromatic ring having two or more nitrogen atoms in the aromatic

ring structure, wherein the aromatic ring is not fused to another aromatic ring. The pi-conjugated monocyclic substrates with multiple nitrogen heteroatoms may have alkyl, N-monoalkylamino and N, N-dialkylamino substituents on the ring.

Pyridine is well known to have a higher resonance stabilization energy than benzene and consistent with this, the modulus of its enthalpy of hydrogenation to piperidine at standard conditions, $|H^o_{H2}|$, of *ca.* 15 kcal/mole $H_2$ is 1.4 kcal/mol $H_2$ lower than that for the hydrogenation of benzene. We have found that by introducing two or more non-adjacent nitrogen heteroatoms (i.e., replacing carbon in the six membered ring) the now thus pi-conjugated monocyclic molecules can usefully display an even lower heat of hydrogenation. Thus for the hydrogenation of 1,4-diazene to the chair form of 1-4-diazacyclohexane, $|\Delta H^o_{H2}|$ = 13.5 kcal mol $H_2$; as compared to that for pyridine, $|\Delta H^o_{H2}|$ = 15.2 kcal/mol $H_2$.

Generally, the substitution of alkyl groups for hydrogen atoms on the ring results in a slight lowering of $\Delta H^o_{H2}$. The greatest reduction in the hydrogenation enthalpy however, is seen with amino, $-NH_2$, alkylamino, -NHR, or dialkyl amino, $-NHR_2$, substituents which act as overall electron donating groups to the pi-conjugated monocyclic compound, thus effectively extending its pi-conjugation. An illustration is provided by 1,4-bis(methylamino)benzene for which $\Delta H^o_{H2}$ is -13.5 kcal/mol $H_2$, as compared to -16.42 kcal/mol $H_2$ for benzene. However, while substitution of hydrogen for other groups may result in a more favorable $\Delta H^o_{H2}$ and more desirable physical properties of the hydrogen carrier, there will be a penalty in terms of gravimetric storage capacity and the substituents should be of minimal molecular weight consistent with performance.

As seen in Table 1b, the pi-conjugated five-membered ring molecule pyrrole (**4**) has the remarkably low $|\Delta H^o_{H2}|$ of 13.37 kcal/mol $H_2$, which is predicted well by our *ab initio* DFT computational method as 13.1 kcal/mol $H_2$. Without being limited by theory, the applicants believe that the low $|\Delta H^o_{H2}|$ of pyrrole is associated with ring strain and the effect of the N heteroatom. For example, the $|\Delta H^o_{H2}|$ of pyrrole is significantly less than the heat of hydrogenation of 1,3-cyclopentadiene to cyclopentane ($|\Delta H^o_{H2}|$ = 25.3 kcal/mol $H_2$) and for the hydrogenation of 1-pentene to n-pentane ( $|\Delta H^o_{H2}|$ = 29.8 kcal/mol $H_2$. ) A second nitrogen atom inserted in the five-membered ring as in imidazole (**40,** Table 1b) has the effect of further reducing $|\Delta H^o_{H2}|$ to 8.8 kcal/mol $H_2$. This enthalpy may be still further reduced by the substitution of an alkyl group on nitrogen for hydrogen as in N-methylimidazole for which $|\Delta H^o_{H2}|$ = 8.6 kcal/mol $H_2$).

Another example of a pi-conjugated monocyclic substrate with multiple nitrogen heteroatoms is pyrazine.

Pi-conjugated monocyclic substrates with multiple nitrogen heteroatoms are available from Aldrich Chemical, Lancaster Synthesis and Acros.

Tables 1a and 1b provide illustrative examples of extended pi-conjugated substrates and their corresponding enthalpies of hydrogenation at 300 K as calculated using the *ab initio* DFT method described above, $\Delta H^o_{H2}$ (300 K) (cal.), and as determined experimentally, $\Delta H^o_{H2}$ (298 K) (exp.). Tables 1a and 1b also provide for selected systems the predicted temperature ($T_{95\%}$) atm.at which 95.24% (nominally 95%) of the fully hydrogenated carrier will be converted back to the pi-unsaturated substrate, ($[AH_{2n}]:[A] = 0.05:1$) at 1 atm. $H_2$, as calculated using the *ab initio* method described above, and as calculated from experimentally derived data (exp.).

Table 1a. Comparative data for benzene (**1**), naphthalene (**2**, **3**), anthracene (**46**) and phenanthrene (**47**).

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **1** | 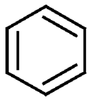 | -15.6 | -16.42 | 319 | 318 |
| **2**[a] | 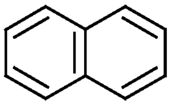 cis | -15.1 | -15.29 | 244 | 262 |
| **3**[b] | 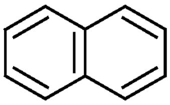 trans | -15.8 | -15.91 | 273 | 280 |
| **46** | 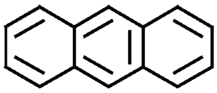 | -15.8 | | 271 | |
| **47** | 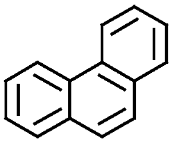 | -14.8 | | 237 | |

[a] Heat of hydrogenation to form *cis*-decalin.
[b] Heat of hydrogenation to form the *trans*-decalin.

Table 1b. Extended pi-conjugated substrates with nitrogen heteroatoms (see above for explanation).

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **4** | 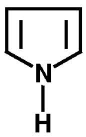 | -13.2 | -13.37 | 248 | 274 |
| **5** | 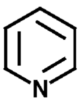 | -15.2 | -14.96 | 268 | 262 |
| **8** | 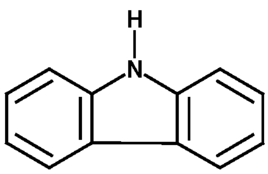 | -12.2 | | 153 | |
| **9** | 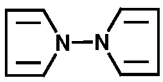 | -11.9 | | 164 | |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **10** | 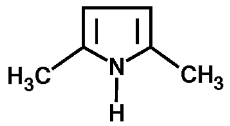 | -12.5 | | 182 | |
| **11** | 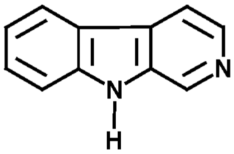 | -11.2 | | 117 | |
| **12** | 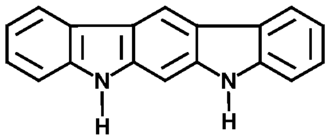 | -10.6 | | 96 | |
| **13** | 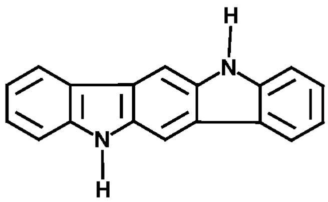 | -10.7 | | 87 | |
| **14** | 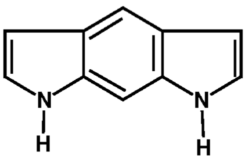 | -11.4 | | 131 | |
| **15** | 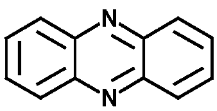 | -14.4 | | 225 | |
| **16** | 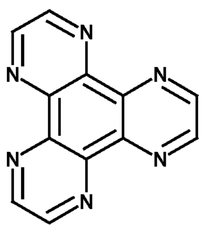 | -11.5 | | 124 | |
| **17** | 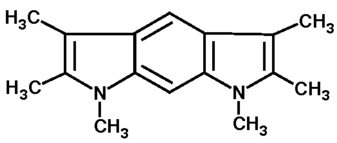 | -9.7 | | 66 | |
| **18** | 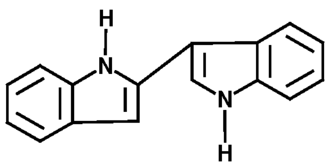 | -11.7 | | 132 | |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **19** | 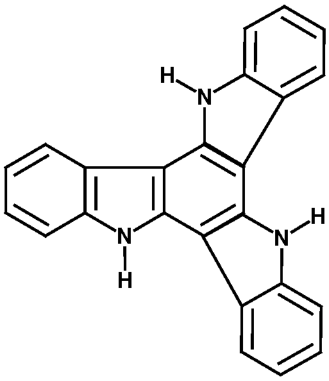 | -8.7 | | 27 | |
| **20** | 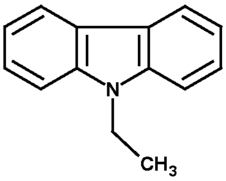 | -12.1* | -12.4* | 128 | 128 |
| **21** | 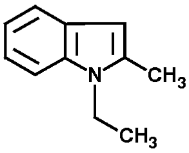 | -12.4 | | 164 | |
| **23** | 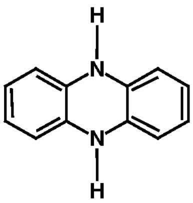 | -14.2 | | 220 | |
| **24** | 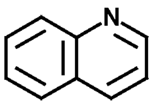 | -14.8 | | 239 | |
| **25** | 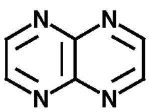 | -12.5 | | 168 | |
| **30** | 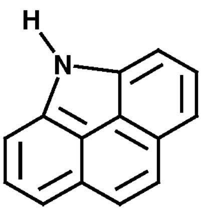 | -12.2 | | 139 | |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **35** | 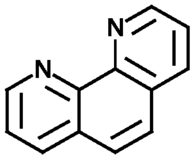 | -13.8 | | 201 | |
| **36** | 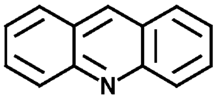 | -15.1 | | 245 | |
| **37** | 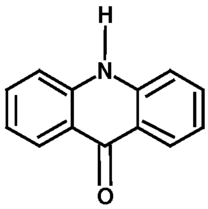 | -12.5 | | 163 | |
| **38** | 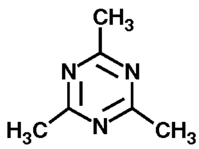 | -15.2 | | 413 | |
| **39** | 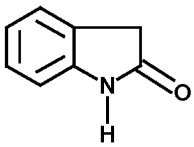 | -9.9 | | 82 | |
| **40** | 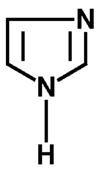 | -8.8 | | 70 | |
| **41** | 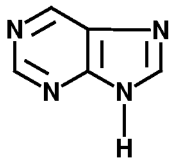 | -6.4 | | | |
| **42** | 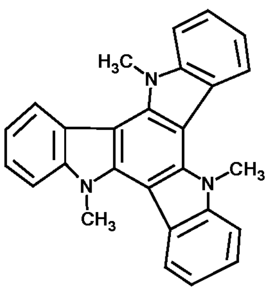 | -9.0 | | | |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **43** | 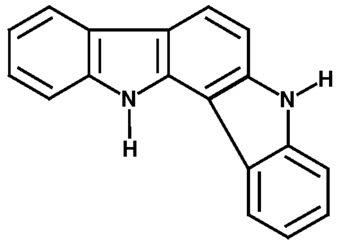 | -10.5 | | 88. | |
| **53** | 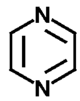 | -13.5 | | | |
| **54** | 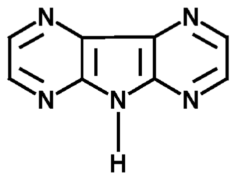 | -7.7 | | | |
| *Calculated and experimental data, both at 150°C. | | | | | |

## 5.1.3 USE OF THE EXTENDED PI-CONJUGATED SUBSTRATES AS REVERSIBLE HYDROGEN CARRIERS

In certain embodiments, the extended pi-conjugated substrates identified above will for the most part be solids in their relatively pure state at ambient conditions. From Example7 it is clear that in admixtures with suitable catalysts it is possible, though admittedly surprising, to conduct the hydrogenation and dehydrogenation chemistry well below the melting point of the substrate.

But it may be preferable under some circumstances to use extended pi-conjugated substrates that are liquid, at least at the hydrogenation and dehydrogenation reaction conditions, that is, the substrates remain in a continuous liquid phase while in contact with the catalyst. In the latter case, the hydrogen storage and release chemistry can be conducted in conventional stirred tank reactors in which mechanical mixing ensures that there is a good mass transfer between the substrate molecules, the dispersed (or dissolved) catalyst, and hydrogen, with minimal mass transfer limitations ensuring rapid kinetics. Alternatively, the hydrogenation or the dehydrogenation could be conducted in a flow-through reactor (see Example 12). A liquid phase hydrogenated substrate could be used to safely and economically transport the gas as the hydrogenated pi-conjugated molecule from a large hydrogen plant, where there is the economy of scale, to distribution and use centers where the hydrogen is catalytically liberated from the liquid carrier at mild conditions for use in fuel cells or other devices. Preferably, the substrates, either in their hydrogenated or dehydrogenated states, should have a melting point of lower than -10°C in order to be transferable in cold weather conditions, and should have a melting point of lower than 100°C if they are to be transported or transferred with supplemental heating. Generally, the substrates will be considered for purposes of this invention to be liquid, and thereby transferable, if they have a viscosity of less than 2000 cSt (centistokes).

One way to render an extended pi-conjugated substrate as a liquid is to utilize mixtures of two or more components, one or more of which comprises an extended pi-conjugated substrate. In some cases, mixtures may form a eutectic mixture. For instance chrysene (1,2-benzophenanthrene, m.p. 250°C) and phenanthrene, (m.p. 99°C) are reported to form a eutectic melting at 95.5°C and for the 3-component system consisting of chrysene, anthracene and carbazole (m.p. 243°C), a eutectic is observed at 192°C. (Pascal, Bull.Soc.Chim.Fr. 1921, 648). The introduction of n-alkyl, alkyl, alkoxy, ether or polyether groups as substituents on the ring structures of the polycyclic aromatic molecules, particularly the use of substituents of varying chain lengths up to 12 carbon atoms, can lower their melting points, but at some cost in "dead weight" and reduced sorbed hydrogen capacity of the systems. Certain substituents, e.g., nitriles and alkynes, can provide additional sorbed hydrogen capacity since each nitrile group can accommodate two molar equivalents of hydrogen.

With the growing importance of vehicular fuel cells, and especially polymer electrolyte membrane fuel cells,

where operating temperatures are below 200°C and therefore easily available heat is also below this temperature, the ability to hydrogenate a substrate having a normal melting point above 200°C while present in a mixture having a freezing point of less than 200°C would be advantageous, especially where the lowered freezing point mixture was predominantly of two or more of the extended pi-conjugated substrates to provide the maximum reversibility of the hydrogenation/dehydrogenation and highest hydrogen storage capacity. The extended pi-conjugated substrates and mixtures as described above provide such advantages.

We have suggested that polycyclic aromatic hydrocarbons with nitrogen heteroatoms are particularly preferred because of their expected lower modulus of ΔH° of hydrogenation. In an article by I. Mochida et al. (Carbon 28, 2000, pp. 305-328) a catalytic polymerization of quinoline, and isoquinoline with $AlCl_3$ is said to yield trimers and higher homologs, as mixtures of liquid nitrogen-containing polycyclic aromatic hydrocarbons which are useful hydrogenation substrates for hydrogen storage in accordance with this invention.

The process of storing hydrogen by a reversible hydrogenation of an extended pi-conjugated substrate in accordance with this invention comprises, in its most general form, the following sequence of steps:

a) contacting hydrogen, in the presence of a hydrogenation catalyst under hydrogenation conditions, with an extended pi-conjugated substrate to effect storage of hydrogen by forming an at least partially hydrogenated extended pi-conjugated substrate; and thereafter

b) contacting the at least partially hydrogenated extended pi-conjugated substrate under dehydrogenation conditions in the presence of an effective amount of a dehydrogenation catalyst to release hydrogen from the at least partially hydrogenated extended pi-conjugted substrate.

In another embodiment of this invention, the hydrogenation catalyst is removed from the at least partially hydrogenated extended pi-conjugated substrate obtained from step a) prior to conducting step b).

As described below in the examples, the hydrogenation and dehydrogenation can be carried out in a single vessel. Hydrogenation catalysts are also known to function as dehydrogenation catalysts and are described herein. Thus the substrate and catalyst, which functions both as hydrogenation catalyst and dehydrogenation catalyst, can be contained in a single vessel and the hydrogenation and dehydrogenation sequentially carried out in the same vessel under appropriate temperature and hydrogen partial pressures.

In another embodiment, the at least partially hydrogenated extended pi-conjugated substrate can be removed from the vessel in which it is hydrogenated and dehydrogenated in another vessel. This is especially preferred where the extended pi-conjugated substrate and the hydrogenated substrate are in a liquid form and so can be transferred and transported as a liquid. Where the hydrogenated and dehydrogenated substrates have a melting point above -10°C, they can be transported as a liquid in most weather conditions without supplemental heat to keep them liquid. Even if the melting point is up to 100°C, the substrates can still be transferred and utilized as liquids with low level heating.

In one embodiment, the invention relates to a process for the storage of hydrogen comprising contacting hydrogen gas with a solid extended pi-conjugated substrate in the presence of an effective amount of a hydrogenation catalyst under hydrogenation conditions to at least partially hydrogenate the extended pi-conjugated substrate.

In another embodiment, the invention relates to a process for the storage of hydrogen comprising contacting hydrogen gas at a hydrogen partial pressure greater than 6.7 bar and at a temperature of between 50°C and 300°C with a solid extended pi-conjugated substrate in the presence of an effective amount of a hydrogenation catalyst to at least partially hydrogenate the extended pi-conjugated substrate.

In order to efficiently contact the hydrogen in the presence of the hydrogenation catalyst with the extended pi-conjugated substrate, which in many cases of the substrates of this invention are relatively involatile solids or liquids at the reaction conditions, it is generally preferred to prepare an intimate physical mixture of the substrate with a hydrogenation catalyst. The substrate, which may be a solid or a liquid, should preferably be sufficiently involatile at least at ambient temperatures and preferably also at the higher temperature reaction conditions so as to preclude the need for its bulk separation or the separation of any of the reaction products or intermediates from the gaseous hydrogen product. It may be necessary however, as a precautionary step in some cases to provide a trap containing an absorbent, which can scavenge and thus remove any trace level volatile containments from the released hydrogen.

Some of the specified suitable substrates, owing to their relatively large molecular size (e.g., three or more five- or six-atom rings), will naturally be solids at the preferred reaction temperatures below 250°C. But as noted above physical (including eutectic) mixtures of a number of these substrates may be liquids, at least at reaction temperatures, which may be advantageous for providing an adequate mixing of the catalyst and reaction components. In such a mixture one of the components may be regarded as being both a solvent and a hydrogenation substrate.

In one embodiment, the invention relates to a process for the storage and subsequent release of hydrogen comprising:

a) contacting hydrogen, in the presence of a hydrogenation catalyst under hydrogenation conditions, with an extended

pi-conjugated substrate to effect storage of hydrogen by forming an at least partially hydrogenated extended pi-conjugated substrate; and thereafter

b) contacting the at least partially hydrogenated extended pi-conjugated substrate under dehydrogenation conditions in the presence of an effective amount of a dehydrogenation catalyst to release hydrogen from the at least partially hydrogenated extended pi-conjugted substrate; wherein

the extended pi-conjugated substrate and the at least partially hydrogenated extended pi-conjugated substrate are liquids at the dehydrogenation conditions of step b).

The hydrogenation catalysts, which are generally known and which will generally also function as dehydrogenation catalysts for purposes of this invention, will comprise finely divided metals, and their oxides and hydrides, of Groups 4, 5, 6 and 8, 9, 10 of the Periodic Table according to the International Union of Pure and Applied Chemistry. Preferred are titanium, zirconium of Group 4; tantalum and niobium of Group 5; molybdenum and tungsten of Group 6; iron, ruthenium of Group 8; cobalt, rhodium and iridium of Group 9; and nickel, palladium and platinum of Group 10 of the Periodic Table according to the International Union of Pure and Applied Chemistry. Of these the most preferred being zirconium, tantalum, rhodium, palladium and platinum, or their oxide precursors such as $PtO_2$. These metals may be used as catalysts and catalyst precursors as metals, oxides and hydrides in their finely divided form, as very fine powders or as skeletal structures such as platinum black or Raney nickel, or well-dispersed on carbon, alumina, silica, zirconia or other medium or high surface area supports, preferably on carbon or alumina. Acidic supports, in combination with transition metal dehydrogenation catalysts, or in some cases, the acidic support alone, may be preferable for dehydrogenation catalysts. Examples of acidic supports are silica-alumina, gamma-alumina, zeolites in the proton-exchanged form, sulfonated zirconia, and solid perfluorinated polymeric sulfonic acids. In some cases the dehydrogenation may be catalyzed by solid state Brönsted or Lewis acids in the absence of transition metals. The above listed supports are, for the most part, of the Brönsted or protonic acid types. Suitable Lewis acid catalysts include aluminum trifluoride, aluminum chlorofluorides, zinc chloride, aluminum chloride, tin chloride, copper trifluoromethane sulfonate, scandium trichloride, and the hexafluoroacetylacetonate of complexes of lanthanum and the other members of the Lanthanide series of elements according to the Periodic Table according to the International Union of Pure and Applied Chemistry. Intermetallic hydrides such as $ZnNiH_{2.8}$ and $ZrCoH_{2.8}$ which have been used as either catalysts or catalyst precursors for a hydrogenolysis at very high temperatures (~500°C) of graphite (to $CH_4$) as described by P. V. Ryabchenko et al. in Khimiya Tverdogo Topliva 19, 129-134 (1985) may likewise be used.

**Reaction of the pi-unsaturated substrate and catalyst mixture with hydrogen.** Traditionally, the catalytic hydrogenation of pi-conjugated substrates (e.g., naphthalene, phenanthrene, pyrene, etc. which are solids at room temperature) is carried out with the compounds dissolved in an hydrogenation-inert solvent, containing a slurry of a heterogeneous catalyst. For example, these conditions are described in J. Org. Chem. 4, 2797 (1980), where ethyl acetate was used as the solvent and a 10% palladium on carbon catalyst was employed. Substrates which are liquid at reaction temperature can be hydrogenated in the presence of a contained slurry catalyst. In the case of both solution and liquid substrates a hydrogen overpressure is used and since hydrogen has a very low solubility in the liquid phase it is essential for realizing an adequate mass transfer to stir the mixture, apply an external rocking motion to the reactor or otherwise ensure intimate contact between the hydrogen gas and the substrate/catalyst interface such as by bubbling or sparging the hydrogen through the substrate/catalyst mixture or using the hydrogen to fluidize or ebullate the substrate/catalyst mixture.

In one embodiment of this invention, the extended pi-conjugated substrate, charged into the reactor as solid (together with the solid catalyst) is hydrogenated in the absence of any solvent. This gas phase hydrogenation of a solid substrate provides for a new and novel gas/solid hydrogenation process.

In another embodiment, the novel gas/solid hydrogenation process can be described as comprising contacting hydrogen gas with a solid extended pi-conjugated substrate as defined in this description in the presence of an effective amount of a hydrogenation catalyst under hydrogenation conditions to at least partially hydrogenate the extended pi-conjugated substrate and more particularly, as a process for the storage of hydrogen comprising contacting hydrogen gas at a hydrogen partial pressure greater than 100 psia (6.7 bar) and at a temperature of between 50°C and 300°C with a solid extended pi-conjugated substrate as defined in this description in the presence of an effective amount of a hydrogenation catalyst to at least partially hydrogenate the extended pi-conjugated substrate.

For conducting the dehydrogenation step, the hydrogen gas overhead pressure, usually in the general range of 500-1000 psia (34.5 bar to 69 bar) for the hydrogenation step, is dropped to 1.5-50 psia (0.1-3.3 bar), which is generally a sufficient pressure for delivering hydrogen to a fuel cell, with the reactor still at temperature. The increase in hydrogen pressure in the system is monitored as a function of time.

Where possible the calculated total hydrogen uptake and release were confirmed by chemical analyses using nuclear magnetic resonance (NMR) for soluble samples and otherwise by mass spectroscopy. For the relatively highly involatile larger pi-conjugated substrates, matrix-assisted laser desorption mass spectroscopy (MALDI) was found to be invaluable for this purpose.

Dehydrogenation processes suitable for use in the present invention are described in R.O. Loufty and E.M. Vekster, in "Investigation of Hydrogen Storage in Liquid Organic Hydrides", Proceedings of the International Hydrogen Energy Forum 2000, Munich Germany, 2000; pp. 335-340; U.S. Patent No. 6,074,447 to Jensen et al.; and Hodoshima et al., Int. J. Hydrogen Energy 28: 1255-1262 (2003). Dehydrogenation processes useful in the present invention include those carried out at from 200°C to 400°C under "wet-dry multiphase conditions", which involves intermittently contacting the saturated liquid hydrocarbon with the heated solid catalyst in a way such that the catalyst is alternately wet and dry described by N. Kariya et al., Applied Catalysis A 233: 91-102 (2002). A preferred dehydrogenation process is a continuous liquid phase process, where the process is carried out at a temperature below the boiling point of the hydrogenated pi-conjugated substrate and the pi-conjugated substrate as described in section 5.1.3. When used in connection with the dehydrogenation process, the phrase "at a temperature below the boiling point of the hydrogenated pi-conjugated substrate and pi-conjugated substrate" means that the process is carried at sufficient pressure to prevent the hydrogenated pi-conjugated substrate and the pi-conjugated substrate from boiling at the reaction temperature.

The following examples are set forth to assist in understanding the invention and do not limit the invention described and claimed herein.

## 6. EXPERIMENTAL

**Example 7:** Reversible Hydrogenation of Carbazole with 5% Rh on carbon catalyst and mechanical grinding. A 0.2 g sample of carbazole (96%, Aldrich) and 0.1 g of rhodium on carbon catalyst (5% Rh, Acros Organics) were ground by hand with an agate mortar and pestle until a uniform mixture was formed. The mixture was then placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was pressurized with helium to 1000 psia and vented. Pressurization and venting with helium was repeated three times. The reactor system was then twice pressurized to 1000 psia (69 bar) hydrogen and vented. The carbazole was hydrogenated by heating the sample mixture to 125°C under 1050 psia (72.4 bar) hydrogen while the mixture was continuously ground for four hours. The reactor was then quickly cooled to room temperature and vented to atmospheric pressure. The reactor was brought into an argon glovebox and the mixture was removed from the reactor, weighed, and half of the material was returned to the reactor for dehydrogenation. The hydrogenated carbazole (h-carbazole) was removed from the mixture by extraction with acetone, filtering of the insoluble catalyst, and drying under vacuum. The reactor system was pressurized to 1000 psia (69 bar) hydrogen and vented to 15 psia (1 bar). The h-carbazole was dehydrogenated by heating the sample mixture to 125°C under 15 psia (1 bar) hydrogen in the absence of mechanical grinding for four hours. The reactor was then quickly cooled to room temperature. The reactor was brought into an argon glovebox and the mixture was removed from the reactor. The dehydrogenated carbazole (dh-carbazole) was removed from the mixture by extraction with acetone, filtering of the insoluble catalyst, and drying under vacuum. Tables 8 and 9 show the product distribution of h-carbazole and dh-carbazole calculated from GC-MS from areas normalized for those masses:

Table 8. Product distribution of h-carbazole calculated from GC-MS from areas normalized for those masses.

| h-Carbazole Sample Components | Molecular Formula | Percentage of Sample Mixture |
|---|---|---|
| Dodecahydrocarbazole | $C_{12}H_{21}N$ | 88 |
| Octahydrocarbazole | $C_{12}H_{17}N$ | 6 |
| Carbazole | $C_{12}H_9N$ | 0 |
| Dicyclohexyl | $C_{12}H_{22}$ | 6 |

Table 9. Product distribution of dh-carbazole calculated from GC-MS from areas normalized for those masses.

| dh-Carbazole Sample Components | Molecular Formula | Percentage of Sample Mixture |
|---|---|---|
| Dodecahydrocarbazole | $C_{12}H_{21}N$ | 16 |

(continued)

| dh-Carbazole Sample Components | Molecular Formula | Percentage of Sample Mixture |
|---|---|---|
| Octahydrocarbazole | $C_{12}H_{17}N$ | 14 |
| Tetrahydrocarbazole | $C_{12}H_{13}N$ | 50 |
| Carbazole | $C_{12}H_9N$ | 12 |
| Dicyclohexyl | $C_{12}H_{20}$ | 4 |
| Cyclohexylbenzene | $C_{12}H_{14}$ | 2 |
| Tributylamine | $C_{12}H_{27}N$ | 2 |

**Example 10:** Hydrogenation and Dehydrogenation of N-Ethylcarbazole in a Single Reactor System. Under inert atmosphere, 8.0 g of N-ethylcarbazole, 0.2 g of 5% ruthenium on lithium aluminate (hydrogenation catalyst), and 0.2 g of 4% palladium on lithium aluminate (dehydrogenation catalyst) were placed in a 20 cc stirred tank reactor and the reactor was sealed. The reactor was connected to a manifold containing a vacuum source, high-pressure hydrogen source, high-pressure ballast, and a flow measurement system consisting of a calibrated 100 sccm flow meter. After evacuation of residual air from the manifold lines, hydrogen was purged through the reactor to displace the argon from the reactor headspace. The reactor and ballast were charged to 1000 psia with hydrogen and the contents were heated with rapid stirring to 160 °C. Heating was continued for ca. 250 minutes until the pressure drop in the system had ceased. The reactor was cooled to 50 °C and the hydrogen pressure reduced to 15 psia (ca. 1 atmosphere). The reactor was then opened to the flow meter. The reactor was heated from 50 °C to 197 °C at a rate of 3 °C/minute under one atmosphere of hydrogen. Upon heating, hydrogen evolved from the hydrogenated N-ethylcarbazole liquid and this hydrogen gas was passed through the flow meters for measurement. The pressure in the system was maintained at a constant 15 psia during the dehydrogenation. After ca. 220 minutes, the flow had diminished to <2 sccm and flow meters were isolated from the reactor and the reactor was cooled to 160 °C. The total amount of hydrogen evolved was 4.99 liters (at standard temperature and pressure) which corresponds to a desorption of 5.6 wt. % hydrogen from the liquid. The hydrogen pressure in the reactor was increased to 1000 psia and the N-ethylcarbazole was rehydrogenated at 160°C. The sequence of hydrogenation (1000 psia hydrogen, 160 °C) and dehydrogenation (15 psia hydrogen, 197 °C) was repeated for a total of five cycles without opening the reactor, adding any contents to the reactor, or removing any contents of the reactor (Fig. 13). After the fifth cycle, the N-ethylcarbazole was hydrogenated (1000 psia hydrogen, 160 °C) in the reactor and the contents removed for analysis. GC/MS analysis of the hydrogenated N-ethylcarbazole showed no detectable degradation or formation of reaction byproducts.

**Example 11:** Hydrogenation of N-ethylcarbazole and Dehydrogenation of N-ethylcarbazole in a Separate Reactor System. A 100 cc stainless steel pressure reactor was loaded with 50 g N-ethylcarbazole and 2.0 g of 5% ruthenium on lithium aluminate. After purging the headspace with hydrogen, the hydrogen pressure was increased to 800 psia. The reactor was heated to 160 °C and the hydrogen pressure increased to 1000 psia. After 2.5 hours, the reactor was cooled to 25 °C and the contents filtered to remove catalyst. GC/MS analysis showed complete conversion to perhydro-N-ethylcarbazole. The GC/MS analysis also revealed that the perhydro-N-ethylcarbazole was present in the hydrogenated mixture as three different conformational isomers (conformers) that were resolved on the GC column. The perhydro-N-ethylcarbazole was degassed by evacuation (1.0 x $10^{-3}$ torr) at 20 °C for 20 minutes. Under inert atmosphere, 4.0 g of N-ethylcarbazole and 0.1 g of 4% palladium on lithium aluminate (dehydrogenation catalyst) were placed in a 20 cc stirred tank reactor and the reactor sealed. The reactor was connected to a manifold containing a vacuum source, hydrogen source, and a flow measurement system consisting of a calibrated 10 and 100 sccm flow meters in series. After evacuation of residual air from the manifold lines, hydrogen was purged through the reactor to displace the argon from the reactor headspace. The reactor was heated to 150 °C with stirring (300 rpm) under 1 atm. hydrogen. After 15 minutes at 150 °C, the measured hydrogen flow corresponded to the desorption of 0.2 wt. % hydrogen. The temperature was then raised to 200 °C, resulting in the rapid dehydrogenation of the hydrogenated N-ethylcarbazole. In the first 60 minutes at 197 °C, 3.8 wt. % hydrogen was desorbed. After 260 minutes at 200 °C, 5.35 wt. % hydrogen was desorbed, giving a total hydrogen desorption of 5.55 wt % hydrogen (Fig. 14).

**Example 12:** Dehydrogenation of N-Ethylcarbazole in Continuous Flow Reactor System. A tubular reactor (3/8 inches in diameter by 7 inches in length) was filled with a small amount of glass beads, the desired amount of catalyst (5% Pd on alumina spheres, 3 mm in diameter), and topped with a small amount of glass beads. The reactor was oriented in a vertical orientation and heated using a tube furnace to the desired temperature (Fig. 15). A piston pump was used to obtain the desired flow of perhydrogenated N-ethyl carbazole from a holding tank through the reactor. The dehydrogenated liquid reaction product was passed through a backpressure regulator into a gas-liquid separator (1 liter cylindrical vessel). Hydrogen gas flowed out the top of the separator and was measured by a flow meter while the liquid flow

dropped to a receiving vessel. In separate experiments (Table 14), the hydrogenated N-ethylcarbazole was flowed from the top of the reactor to the bottom (downflow) and from the bottom of the reactor to the top of the reactor (upflow). Pressure in the reactor was controlled by the use of backpressure regulators.

Table 14. Dehydrogenation of hydrogenated N-ethylcarbazole with palladium on alumina catalyst in a flowing reactor system under various conditions of catalyst loading, temperature, and pressure inside of the reactor system.

| Table Entry | N-Ethylcarbazole Flow (grams/minute) | Catalyst Amount (grams) | Pressure (psia) | Temperature (°C) | Hydrogen Flow (sccm) |
|---|---|---|---|---|---|
| | DOWNFLOW | | | | |
| 1 | 0.5 | 10 | 25 | 185 | 110 |
| 2 | 0.5 | 10 | 25 | 190 | 160 |
| 3 | 0.25 | 5 | 28 | 190 | 65 |
| 4 | 0.5 | 5 | 28 | 190 | 85 |
| 5 | 0.5 | 5 | 115 | 190 | 40 |
| 6 | 0.5 | 5 | 30 | 170 | 40 |
| 7 | 0.25 | 5 | 30 | 166 | 36 |
| 8 | 0.25 | 5 | 30 | 190 | 68 |
| | UPFLOW | | | | |
| 9 | 0.25 | 5 | 26 | 170 | 30 |
| 10 | 0.5 | 5 | 26 | 170 | 28 |
| 11 | 0.25 | 5 | 29 | 193 | 43 |
| 12 | 0.5 | 5 | 29 | 193 | 60 |

**Example 13.** Measurement of Heat of Reaction for the Hydrogenation of N-Ethylcarbazole. Hydrogenation calorimetry experiments were conducted using a Mettler RC1 e Reaction Calorimeter with a HP100 stainless steel reactor. The reactor was equipped with a gas-inducing impeller operated at 1800 rpm. Hydrogen was delivered to the reactor using a Büchi PressFlow gas controller, to yield an accurate measure of the amount of hydrogen consumed. The reaction calorimeter calculates the heat flow rate into or out of the reactor by multiplying the difference between the jacket temperature and the reaction temperature by the heat transfer coefficient for the reaction system. This heat transfer coefficient, U, varies with the properties of the liquid in the reactor, the reactor internals (impeller, baffles, etc.), and the agitation rate. The rate of heat production by the reaction was calculated from the overall heat flow rate by considering other terms in the heat balance. In a batch experiment, the most important other term is the sensible heat change in the reactor, for example during a temperature ramp, or during a temperature overshoot at the onset of reaction. Calculating this term requires the heat capacity, $c_P$, of the reactor contents. For the highest quality calorimetric data, the values of U and $c_P$ must be measured as a function of temperature and liquid composition, and baseline conditions must be established before and after the reaction phase. A separate experiment was conducted prior to the reaction batches to establish some of the required parameters for the N-ethylcarbazole starting material. Values for U and $c_P$ were measured using the RC1 at temperatures ranging from 100°C to 160°C at 20°C intervals. These measurements were made without catalyst present in the reactor.

The reactor was charged with 1150 grams of N-ethylcarbazole and heated to 150 °C. To attain a good baseline and an accurate U measurement at the front end of the experiment, the catalyst was added only after these objectives had been met, i.e., after attaining reaction temperature. The reactor was charged with 40 g of 5% ruthenium on lithium aluminate catalyst by direct addition to the liquid N-ethylcarbazole at 150°C, after which the agitation was started and the reactor was quickly pressurized to 1000 psia. The hydrogenation was conducted for 20 hours at 150 °C while maintaining a constant hydrogen pressure of 1000 psia. After 20 hours, the measured hydrogen uptake suggested a nearly complete hydrogenation. During the hydrogenation, the calculated heat of reaction held steady at about 12.4 kcal/mol $H_2$ for 1.5 < $H_2$/N-ethylcarbazole < 3.5, then decreased linearly to about 11.8 kcal/mol $H_2$ at $H_2$/N-ethylcarbazole=5.

**Example 14:** Reversible Hydrogenation of 1-Ethyl-2-methylindole/1,2-Dimethylindole Mixture. A mixture of 4.2 g 1,2-dimethylindole and 1.8 g 1-ethyl-2-methylindole was placed in a 20 cc stainless steel reactor. This mixture was a

free-flowing liquid at 20 °C. To the liquid mixture was added 1.0 g of 5% ruthenium on lithium aluminate. The reactor was sealed and the headspace purged with hydrogen. The mixture was heated to 170 °C under 700 psia hydrogen with stirring (500 rpm) for 3 hours. The reactor was cooled to ambient temperature and the contents dissolved in 100 cc chloroform. The catalyst was removed by filtration. The hydrogenated 1,2-dimethylindole/1-ethyl-2-methylindole mixture was isolated by removing the chloroform under vacuum. GC/MS analysis of the liquid hydrogenated mixture indicated complete hydrogenation of both 1,2-dimethylindole and 1-ethyl-2-methylindole (Table 15).

Table 15. GC/MS analysis of the products formed by hydrogenating a mixture of 1,2-dimethylindole and 1-ethyl-2-methylindole and the calculated amount of hydrogen available for the reverse (dehydrogenation) reaction.

| Molecular Weight | Percentage of Sample Mixture | Available wt. % hydrogen |
|---|---|---|
| 153 (perhydrogenated 1,2-dimethylindole) | 67 | 3.5 |
| 167 (perhydro 1-ethyl-2-methyindole) | 33 | 1.6 |

Under an argon atmosphere, a 20 cc stainless steel reactor was charged with 4.8 g of the hydrogenated 1,2-dimethylindole/1-ethyl-2-methylindole mixture and 0.5 g of 5% palladium on alumina. After evacuation of residual air from the manifold lines, hydrogen was purged through the reactor to displace the argon from the reactor headspace. The mixture was heated to 175 °C with stirring under 1 atm. hydrogen for 13 hours. After cooling to 25 °C, the reactor was opened under argon and the reactor contents were analyzed by GC/MS (Table 16).

Table 16. GC/MS analysis of the products formed by hydrogenating a mixture of 1,2-dimethylindole and 1-ethyl-2-methylindole.

| Molecular Weight | Percentage of Sample Mixture |
|---|---|
| 153 (perhydrogenated 1,2-dimethylindole) | 6.8 |
| 149 (hydrogenated intermediate of 1,2-dimethylindole) | 4.7 |
| 145 (1,2-dimethylindole) | 53 |
| 163 (hydrogenated intermediate of 1-ethyl-2-methylindole) | 2.9 |
| 159 (1-ethyl-2-methylindole) | 33 |

From the distribution of compounds in the dehydrogenated mixture, the calculated amount of desorbed hydrogen was 4.5 wt. %. The reactor was resealed and hydrogen was purged through the reactor to displace the argon from the reactor headspace. The mixture was heated to 185 °C with stirring under 1 atm. hydrogen for 3.0 hours. After cooling to 25 °C, the reactor was opened under argon and the reactor contents were analyzed by GC/MS (Table 17).

Table 17. GC/MS analysis of the products formed by dehydrogenating the hydrogenated mixture of 1,2-dimethylindole and 1-ethyl-2-methylindole described in Table 16.

| Molecular Weight | Percentage of Sample Mixture |
|---|---|
| 149 (hydrogenated intermediate of 1,2-dimethylindole) | 2 |
| 163 (hydrogenated intermediate of 1-ethyl-2-methylindole) | 1 |
| 159 (1-ethyl-2-methylindole) | 60 |
| 145 (1,2-dimethylindole) | 37 |

From the distribution of compounds in the dehydrogenated mixture, the calculated amount of desorbed hydrogen was 5.03 wt. %, and 99% of the available hydrogen was recovered.

**Example 15:** Reversible Hydrogenation of 1-Ethyl-2-methylindole. A 100 cc stainless steel pressure reactor was loaded with 55 g 1-ethyl-2-methylindole and 2.5 g of 5% ruthenium on lithium aluminate. After purging the headspace with hydrogen, the reactor was heated to 160 °C and the hydrogen pressure increased to 1000 psia with stirring (1000 rpm). After 2 hours the reactor was cooled to ambient temperature. GC-MS analysis of the reactor contents indicated that the hydrogenated product contained 95% perhydrogenated 1-ethyl-2-methylindole (h-1-ethyl-2-methylindole), 2% 1-ethyl-2-methylindole starting material, and 3% hydrogenation intermediates. Under inert atmosphere, 4.0 g of the hydrogenated mixture, 0.1 g of 5% palladium on alumina were placed in a 20 cc stirred tank reactor, and the reactor

was sealed. The reactor was connected to a manifold containing a vacuum source, hydrogen source, and a flow measurement system consisting of a calibrated 10 and 100 sccm flow meters in series. After evacuation of residual air from the manifold lines, hydrogen was purged through the reactor to displace the argon from the reactor headspace. The reactor was heated to 180 °C with stirring (300 rpm) under 1 atm. hydrogen. After 17.5 hours at 180 °C, the measured hydrogen flow corresponded to the desorption of 4.55 wt. % hydrogen (Fig. 16). The first 4 wt. % hydrogen was desorbed after the first 5 hours at 180 °C. The dehydrogenated sample was analyzed by GC/MS (Table 18).

Table 18. Normalized distribution of products (GC/MS) formed by dehydrogenating a hydrogenated form of 1-ethyl-2-methylindole at 180 °C.

| Molecular Weight | Percentage of Sample Mixture |
|---|---|
| 159 (1-ethyl-2-methylindole) | 96 |
| 163 (hydrogenated intermediate of 1-ethyl-2-methylindole) | 4 |

From the distribution of compounds in the dehydrogenated mixture, the calculated amount of desorbed hydrogen was 4.6 wt. %. Under inert atmosphere, 4.0 g of the hydrogenated mixture, 0.1 g of 5% palladium on alumina were placed in a 20 cc stirred tank reactor, and the reactor was sealed. The reactor was connected to a manifold containing a vacuum source, hydrogen source, and a flow measurement system consisting of a calibrated 10 and 100 sccm flow meters in series. After evacuation of residual air from the manifold lines, hydrogen was purged through the reactor to displace the argon from the reactor headspace. The reactor was heated to 160 °C with stirring (300 rpm) under 1 atm. hydrogen. After 24 hours at 160 °C, the measured hydrogen flow corresponded to the desorption of 3.55 wt. % hydrogen (Fig. 17). The dehydrogenated sample was analyzed by GC/MS (Table 19).

Table 19. Normalized distribution of products (GC/MS) formed by dehydrogenating a hydrogenated form of 1-ethyl-2-methylindole at 160 °C.

| Molecular Weight | Percentage of Sample Mixture |
|---|---|
| 159 (1-ethyl-2-methylindole) | 56.7 |
| 163 (hydrogenated intermediate of 1-ethyl-2-methylindole) | 35.6 |
| 167 (perhydrogenated 1-ethyl-2-methylindole) | 7.6 |

From the distribution of compounds in the dehydrogenated mixture, the calculated amount of desorbed hydrogen was 3.6 wt. %.

## 6.1 DISCUSSION OF THE EXAMPLES

Example 7 teaches that the reversible hydrogenation of extended pi-conjugated substrates containing heteroatoms (e.g. N, O, S) can be carried out under mild conditions and short reaction times in the solid state for the storage of hydrogen. A mixture of solid carbazole ($C_{12}H_9N$) and solid catalyst can be used to efficiently adsorb hydrogen in four hours or less at 125°C and 1050 psia (72.4 bar) hydrogen gas pressure. This temperature is about 120°C below the melting point of carbazole (246°C), which suggests that the hydrogenation occurs readily in the solid state. The quantitative hydrogenation of carbazole and the very high conversion (94%) to the perhydrogenated form, dodecahydrocarbazole ($C_{12}H_{21}N$), leads to a large 6.6 wt. % hydrogen storage capacity. A small amount of hydrogenolysis is observed in the formation of dicyclohexyl during the hydrogenation reaction. This could be attenuated by lessening the reaction time and/or stopping the hydrogenation reaction immediately after complete conversion of carbazole. The generally smaller ΔH of hydrogenation predicted for polyaromatic hydrocarbons containing N heteroatoms (Fig. 7 and related discussion) is manifested in a facile dehydrogenation of the hydrogenated carbazole. Dehydrogenation is accomplished at only 125°C under 15 psia (1 bar) hydrogen gas pressure in the absence of mechanical grinding to yield 3.1 wt. % hydrogen gas after only four hours. A small amount of additional hydrogenolysis is observed during the dehydrogenation reaction leading to the observation of dicyclohexyl, cyclohexylbenzene, and tributylamine.

Example 10 teaches that the reversible hydrogenation of N-ethylcarbazole can be used to store substantial amounts of hydrogen under mild conditions of temperature and pressure. Furthermore, the pi-conjugated N-ethylcarbazole substrate can be subjected to multiple cycles of hydrogenation and dehydrogenation with no discernable chemical degradation of the substrate, thus forming the basis for a cyclic hydrogen storage process in a single vessel. The low volatility of the hydrogenated N-ethylcarbazole liquid substrate facilitates the recovery of hydrogen from the liquid carrier. In the presence of separate hydrogenation and dehydrogenation catalysts, the N-ethylcarbazole substrate was hydrogenated under 1000 psia hydrogen at 160 °C for 250 minutes, storing ca. 5.8 wt. % hydrogen. By reducing the hydrogen pressure to 15 psia and increasing the temperature to 197 °C, hydrogen was delivered by a catalytic dehydrogenation of the hydrogenated N-ethylcarbazole (Fig. 13). Due to the low volatility of N-ethylcarbazole and the various hydrogenated N-ethylcarbazole intermediates, no device (e.g. condenser or membrane) was necessary to separate the hydrogen from the liquid substrate in the reactor. The hydrogen evolved from the reactor while the liquid substrate remained in the reactor. After 220 minutes at 197 °C, *ca.* 5.6 wt. % hydrogen was delivered from the N-ethylcarbazole substrate. The substrate was then rehydrogenated under the original hydrogenation conditions (1000 psia hydrogen, 160 °C). The cycle of hydrogenation and dehydrogenation was repeated five times followed by a sixth hydrogenation. In all five cycles, over 5.5 wt. % hydrogen was delivered and no decrease in the hydrogen storage capacity was evident. The rate of hydrogen delivery did not exhibit a systematic change over the five cycles, with times ranging from 220-370 minutes for the delivery of over 5.5 wt. % hydrogen at 197 °C. Thus, N-ethylcarbazole in a single reactor system can be used to reversibly store hydrogen using a temperature/pressure swing mode where hydrogenation (charging) is accomplished by raising the hydrogen pressure to above the equilibrium pressure for hydrogenation at the desired hydrogenation temperature and dehydrogenation (discharging) can be accomplished by lowering the pressure to below the equilibrium pressure for hydrogenation and increasing the temperature. Alternatively, the storage of hydrogen by the reversible hydrogenation of a pi-conjugated substrate can be accomplished using a pressure swing mode. In the pressure swing mode, at a temperature that is suitable for both hydrogenation and dehydrogenation, the temperature is held constant while the pressure is increased or decreased to effect the desired hydrogenation (charging) or dehydrogenation (discharging).

Example 11 demonstrates that the reversible hydrogenation of N-ethylcarbazole can be used to store substantial amounts of hydrogen in the form of a hydrogenated liquid substrate and that the hydrogenated liquid substrate can be transported to a location where the hydrogen is recovered using a dehydrogenation reactor. A hydrogenation reactor system can be used to capture and store the hydrogen by the hydrogenation of a liquid-phase pi-conjugated substrate. The free-flowing liquid-phase hydrogenated substrate can be pumped or poured for distribution to holding tanks and storage vessels. The liquid can be easily transported using conventional methods for liquid transport and distribution (pipelines, railcars, tanker trucks). The hydrogen is generated at the point of use by a dehydrogenation reactor system that delivers hydrogen and recovers the dehydrogenated substrate for eventual transportation back to the hydrogenation reactor site. In the presence of a hydrogenation catalyst, N-ethylcarbazole was hydrogenated under 1000 psia hydrogen at 160 °C for 2.5 hours in a hydrogenation reactor. The hydrogenated N-ethylcarbazole is a colorless, free-flowing, low-volatility liquid that is easily handled. Analysis of the hydrogenated N-ethylcarbazole using GC/MS revealed the presence of three different conformers. These conformers are individual compounds with the same formula and bond connectivity, but different stereochemistry. They will have different physical properties, including a different $\Delta H$ of hydrogenation for each conformer. After filtration to remove the hydrogenation catalyst, the hydrogenated liquid was transported to a dehydrogenation reactor. In the presence of a dehydrogenation catalyst, hydrogenated N-ethylcarbazole was dehydrogenated under 15 psia hydrogen at temperatures between 150-197 °C, yielding 5.55 wt. % hydrogen after 260 minutes at 197 °C (Fig. 14).

Example 12 teaches that the dehydrogenation of hydrogenated N-ethylcarbazole can be carried out in a continuous flowing dehydrogenation reactor system. Continuous flow reactor systems may be well suited to applications where steady hydrogen flow rates are preferred. Flow systems can facilitate the collection of dehydrogenated substrate for transportation to a hydrogenation reactor. The rate of dehydrogenation and hydrogen flow from the reactor can be controlled by the temperature of the dehydrogenation reactor and the hydrogen pressure inside of the dehydrogenation reactor. The low volatility of N-ethylcarbazole and the various hydrogenated N-ethylcarbazole intermediates allows the separation of hydrogen from the dehydrogenated liquid substrate using a simple gas-liquid separator vessel. In a tubular reactor packed with beaded dehydrogenation catalyst, hydrogenated N-ethylcarbazole was dehydrogenated by passing the liquid through a bed of the dehydrogenation catalyst at temperatures ranging from 166-193 °C and hydrogen pressures ranging from 25 psia to 115 psia. The dehydrogenated liquid was easily separated from the hydrogen using a simple gas-liquid separator and sent to a recovery tank. The hydrogen flow rate was controlled by the temperature of the reactor system. In entry 7 of Table 14, the hydrogen flow rate was 36 sccm at a dehydrogenation reactor temperature of 166 °C. With an identical catalyst loading and hydrogen pressure (30 psia), the hydrogen flow rate was 68 sccm at a dehydrogenation reactor temperature of 190 °C (Table 14, entry 8). The hydrogen flow rate was also controlled using the hydrogen pressure in the dehydrogenation reactor system. In entry 4 of Table 14, the hydrogen flow rate was 85 sccm at a dehydrogenation reactor hydrogen pressure of 28 psia. With an identical catalyst loading and reactor temperature (190 °C), the hydrogen flow rate was 40 sccm at a dehydrogenation reactor hydrogen pressure of 115 psia.

Example 13 demonstrates that N-ethylcarbazole has a heat of hydrogenation that is substantially lower than the heat of hydrogenation for other aromatic substrates (e.g. benzene, naphthalene, pyridine). The comparatively low heat of hydrogenation for N-ethylcarbazole results in a lower temperature dehydrogenation than any hydrogen carrier in the prior art. In a reaction calorimeter, N-ethylcarbazole was hydrogenated under 1000 psia hydrogen at 150 °C for 20 hours. Baseline heat flows were carefully measured in order to accurately determine the amount of heat generated by the hydrogenation reaction. The heat of hydrogenation of (liquid) N-ethylcarbazole at 150 °C varied between 12.4

kcal/mol $H_2$ and 11.8 kcal/mol $H_2$ as the hydrogenation reaction was carried to completion. As far as we are aware, there are no aromatic compounds that have been reported to have a heat of hydrogenation, $|\Delta H^{o}_{H2}|$, lower than the -14.96 kcal/mol for pyridine $H_2$ (see Table 1b). Our experimental finding of -11.8 to -12.4 kcal/mol $H_2$ compares very well with our calculated (from the gas phase, quantum mechanics) $\Delta H_{H2}$ at 150°C for N-ethylcarbazole -12.4 kcal/mol $H_2$), lending credence to the other computational heats of hydrogenation as shown in Tables 1a-1d.

Example 14 teaches that a mixture of pi-conjugated substrates can be used to store substantial amounts of hydrogen under mild conditions of temperature and pressure. A higher capacity substrate (1,2-dimethylindole) that is a solid at ambient temperature and a slightly lower capacity substrate (1-ethyl-2-methylindole) that is a liquid at ambient temperature were blended in a 2:1 (mol/mol) ratio to form a mixture that was a free-flowing liquid at ambient temperature (20 °C). In the presence of a hydrogenation catalyst, the 1,2-dimethylindole/1-ethyl-2-methylindole mixture was hydrogenated under 700 psia hydrogen at 170 °C for 3 hours with stirring (500 rpm) in a hydrogenation reactor. The hydrogenated 1,2-dimethylindole/1-ethyl-2-methylindole mixture is a colorless, free-flowing, low-volatility liquid that is easily handled. After filtration to remove the hydrogenation catalyst, the hydrogenated liquid was placed in a dehydrogenation reactor. In the presence of a dehydrogenation catalyst, the hydrogenated 1,2-dimethylindole/1-ethyl-2-methylindole mixture was dehydrogenated under 15 psia hydrogen at 175 °C for 13 hours, yielding 4.5 wt. % hydrogen. Additional heating for 3 hours at 185 °C yielded more hydrogen, giving a total amount of 5.03 wt. % hydrogen stored and recovered (99% of theoretical capacity).

Example 15 demonstrates that the reversible hydrogenation of 1-ethyl-2-methylindole can be used to store substantial amounts of hydrogen under mild conditions of temperature and pressure and release hydrogen at very mild temperatures. The dehydrogenation of liquid pi-conjugated substrates at low temperatures yields several advantages over the high-temperature dehydrogenation processes taught in the prior art. These include higher energy efficiency, compatibility with hydrogen fuel cell and hydrogen internal combustion engine waste heat, and ease of separation of hydrogen from the dehydrogenated liquid substrates. In the presence of a hydrogenation catalyst, 1-ethyl-2-methylindole (boiling point 267 °C at 760 mm pressure) was hydrogenated under 1000 psia hydrogen at 160 °C for 2 hours in a hydrogenation reactor. The hydrogenated 1-ethyl-2-methylindole is a colorless, free-flowing, low-volatility liquid that is easily handled. After filtration to remove the hydrogenation catalyst, a portion of the hydrogenated liquid was placed in a dehydrogenation reactor. In the presence of a dehydrogenation catalyst, hydrogenated 1-ethyl-2-methylindole was dehydrogenated under 15 psia hydrogen at 180 °C for 17.5 hours, yielding ca. 4.6 wt. % hydrogen (Fig. 16). A second portion of the hydrogenated liquid was placed in a dehydrogenation reactor. In the presence of a dehydrogenation catalyst, hydrogenated 1-ethyl-2-methylindole was dehydrogenated under 15 psia hydrogen at 160 °C for 24 hours, yielding ca. 3.6 wt. % hydrogen (Fig. 17).

The present invention is not to be limited in scope by the specific embodiments disclosed in the examples which are intended as illustrations of a few aspects of the invention.

## Claims

1. A process for the storage and subsequent release of hydrogen comprising:

    a) contacting hydrogen, in the presence of a hydrogenation catalyst under hydrogenation conditions, with an extended pi-conjugated substrate to effect storage of hydrogen by forming an at least partially hydrogenated extended pi-conjugated substrate; wherein the extended pi-conjugated substrate is selected from the group consisting of extended pi-conjugated substrates with nitrogen heteroatoms comprising (1) a five-membered cyclic aromatic hydrocarbon containing a nitrogen atom in the five-membered aromatic ring, or (2) a six-membered cyclic aromatic hydrocarbon containing a nitrogen atom in the six-membered aromatic ring, wherein the nitrogen containing heterocyclic molecule is fused to at least one six-membered aromatic sextet structure which may also contain a nitrogen heteroatom; pi-conjugated monocyclic substrates with multiple nitrogen heteroatoms which have a five-membered or six-membered aromatic ring having two or more nitrogen atoms in the aromatic ring structure, wherein the aromatic ring is not fused to another aromatic ring; and any combination of the foregoing; and thereafter
    b) contacting the at least partially hydrogenated extended pi-conjugated substrate under dehydrogenation conditions in the presence of an effective amount of a dehydrogenation catalyst to release hydrogen from the at least partially hydrogenated extended pi-conjugated substrate.

2. The process of claim 1, wherein the extended pi-conjugated substrate is an extended pi-conjugated substrate with nitrogen heteroatoms selected from the group consisting of phenanthroline, quinoline, N-methylindole, 1,2-dimethylindole, 1-ethyl-2-methylindole; carbazole, N-methylcarbazole, N-ethylcarbazole, N-n-propylcarbazole, N-iso-propylcarbazole; acridine; indolo[2,3-b]carbazole, indolo[3,2-a]carbazole, 1,4,5,8,9,12-hexaazatriphenylene, pyrazine[2,3-b]pyrazine, N,N,N''-trimethyl-6,11-dihydro-5H- diindolo[2,3-a:2',3'-c]carbazole, 1,7-dihydrobenzo[1,2-b:5,4-b']dipyrrole, 4H-benzo[def]carbazole; and any combination oftwo or more of the foregoing.

**3.** The process of claim 1, wherein the extended pi-conjugated substrate is a pi-conjugated monocyclic substrate with multiple heteroatoms which comprises two or more non-adjacent nitrogen heteroatoms.

**4.** The process of claim 1, wherein the extended pi-conjugated substrate with nitrogen heteroatoms comprises structures having a ketone group in at least one ring structure, wherein the ring structure with the ketone group is fused to at least one carbon ring structure which is an aromatic sextet, preferably wherein the extended pi-conjugated substrate is flavanthrone.

**5.** The process of claim 1, wherein the extended pi-conjugated substrate is a pi-conjugated monocyclic substrate with multiple nitrogen heteroatoms selected from the group consisting of pyrazine, imidazole, N-methylimidazole; and any combination thereof.

**6.** The process of any one of claims 1 to 5, wherein the hydrogenation catalyst also functions as the dehydrogenation catalyst.

**7.** The process of any one of claims 1 to 6, wherein the extended pi-conjugated substrate in step a)resides in the liquid state and step a) is conducted in a first vessel; and the at least partially hydrogenated extended pi-conjugated substrate in step b) resides in the liquid state and step b) is conducted in a second vessel.

**8.** The process of any one of claims 1 to 7, wherein step b) is conducted at a temperature below 300 °C and at a hydrogen partial pressure greater than 0.1 bar.

**9.** The process of any one of claims 1 to 8, wherein the modulus of the standard enthalpy change of hydrogenation of the extended pi-conjugated substrate in step a) is less than 15.0 kcal/mol $H_2$.

**10.** The process of any one of claims 1 to 9, wherein the hydrogenation catalyst in step a) and/or the dehydrogenation catalyst in step b) comprises a metal selected from the group consisting of titanium, zirconium, cobalt, niobium, tantalum, iron, molybdenum, tungsten, ruthenium, rhodium, iridium, nickel, palladium, and platinum.

**11.** The process of any one of claims 1 to 10, wherein the extended pi-conjugated substrate and the at least partially hydrogenated extended pi-conjugated substrate are liquids at the dehydrogenation conditions of step b).

**12.** A process for the storage of hydrogen comprising contacting hydrogen gas with a solid extended pi-conjugated substrate as defined in any one of the claims 1 to 5 in the presence of an effective amount of a hydrogenation catalyst under hydrogenation conditions to at least partially hydrogenate the extended pi-conjugated substrate.

**13.** The process of claim 12, wherein the hydrogen gas is contacted with the solid extended pi-conjugated substrate at a hydrogen partial pressure greater than about 6.7 bar and at a temperature of between about 50 °C and about 300 °C.

## Patentansprüche

**1.** Ein Verfahren zur Speicherung und anschließenden Freisetzung von Wasserstoff, umfassend:

a) Inkontaktbringen von Wasserstoff, in der Gegenwart eines Hydrierungskatalysators und unter Hydrierungsbedingungen, mit einem Substrat, das ein ausgedehntes pi-konjugiertes System besitzt, um eine Speicherung von Wasserstoff dadurch zu bewirken, dass ein wenigstens teilweise hydriertes Substrat, das ein ausgedehntes pi-konjugiertes System besitzt, gebildet wird; wobei das Substrat, das ein ausgedehntes pi-konjugiertes System besitzt, ausgewählt ist aus der Gruppe bestehend aus Substraten, die ein ausgedehntes pi-konjugiertes System besitzen, mit Stickstoff-Heteroatomen umfassend (1) einen fünfgliedrigen zyklischen aromatischen Kohlenwasserstoff enthaltend ein Stickstoffatom im fünfgliedrigen aromatischen Ring, oder (2) einen sechsgliedrigen zyklischen aromatischen Kohlenwasserstoff enthaltend ein Stickstoffatom im sechsgliedrigen aromatischen Ring, wobei der stickstoffhaltige Heterozyklus mit wenigstens einer sechsgliedrigen aromatischen Sextett-Struktur

fusioniert ist, die ebenfalls ein Stickstoff-Heteroatom enthalten kann; pikonjugierten monozyklischen Substraten mit mehreren Stickstoff-Heteroatomen und mit einem fünfgliedrigen oder sechsgliedrigen aromatischen Ring mit zwei oder mehr Stickstoffatomen in der aromatischen Ringstruktur, wobei der aromatische Ring nicht mit einem anderen aromatischen Ring fusioniert ist; und jeglicher Kombination davon; und danach
b) Inkontaktbringen des wenigstens teilweise hydrierten Substrats, das ein ausgedehntes pi-konjugiertes System besitzt, unter Dehydrierungsbedingungen in der Gegenwart einer wirksamen Menge eines Dehydrierungskatalysators, um Wasserstoff aus dem wenigstens teilweise hydrierten Substrat, das ein ausgedehntes pi-konjugiertes System besitzt, freizusetzen.

**2.** Das Verfahren gemäß Anspruch 1, wobei das Substrat, das ein ausgedehntes pi-konjugiertes System besitzt, ein Substrat, das ein ausgedehntes pi-konjugiertes System besitzt, mit Stickstoffatomen ist, ausgewählt aus der Gruppe bestehend aus P henanthrolin, Chinolin, N-Methylindol, 1,2-Dimethylindol, 1-Ethyl-2-methylindol; Carbazol, N-Methylcarbazol, N-Ethylcarbazol, N-n-Propylcarbazol, N-iso-Propylcarbazol; Acridin; Indolo[2,3-b]carbazol, Indolo[3,2-a]carbazol, 1,4,5,8,9,12-Hexaazatriphenylen, Pyrazin[2,3-b]pyrazin, N,N,N"-Trimethyl-6,11-dihydro-5H- diindolo[2,3-a:2',3'-c]carbazol, 1,7-Dihydrobenzo[1,2-b:5,4-b']dipyrrol, 4H-Benzo[def]carbazol; und jeglicher Kombination von zwei oder mehr davon.

**3.** Das Verfahren gemäß Anspruch 1, wobei das Substrat, das ein ausgedehntes pi-konjugiertes System besitzt, ein monozyklisches Substrat, das ein ausgedehntes pi-konjugiertes System besitzt, mit mehreren Heteroatomen ist, das zwei oder mehr nicht zueinander benachbarte Stickstoffatome enthält.

**4.** Das Verfahren gemäß Anspruch 1, wobei das Stickstoff-Heteroatom-haltige Substrat, das ein ausgedehntes pi-konjugiertes System besitzt, Strukturen umfasst, die eine Ketogruppe in mindestens einer Ringstruktur besitzen, wobei die Ketogruppen-haltige Ringstruktur fusioniert ist mit wenigstens einer Kohlenstoff-Ringstruktur, die ein aromatisches Sextett ist, wobei das Substrat, das ein ausgedehntes pi-konjugiertes System besitzt, bevorzugt Flavanthron ist.

**5.** Das Verfahren gemäß Anspruch 1, wobei das Substrat, das ein ausgedehntes pi-konjugiertes System besitzt, ein monozyklisches Substrat, das ein ausgedehntes pi-konjugiertes System besitzt, mit mehreren Stickstoff-Heteroatomen ist, ausgewählt aus der Gruppe bestehend aus Pyrazin, Imidazol, N-Methylimidazol; und jeglicher Kombination davon.

**6.** Das Verfahren gemäß irgendeinem der Ansprüche 1 bis 5, wobei der Hydrierungskatalysator auch als der Dehydrierungskatalysator fungiert.

**7.** Das Verfahren gemäß irgendeinem der Ansprüche 1 bis 6, wobei das Substrat, das ein ausgedehntes pi-konjugiertes System besitzt, in Schritt a) im flüssigen Zustand ist und Schritt a) in einem ersten Gefäß ausgeführt wird; und das wenigstens teilweise hydrierte Substrat, das ein ausgedehntes pi-konjugiertes System besitzt, in Schritt b) im flüssigen Zustand ist und Schritt b) in einem zweiten Gefäß ausgeführt wird.

**8.** Das Verfahren gemäß irgendeinem der Ansprüche 1 bis 7, wobei Schritt b) bei einer Temperatur unterhalb von 300 °C und einem Wasserstoffpartialdruck von höher als 0,1 bar durchgeführt wird.

**9.** Das Verfahren gemäß irgendeinem der Ansprüche 1 bis 8, wobei der Modulus der Änderung der Standardenthalpie für die Hydrierung des Substrats, das ein ausgedehntes pi-konjugiertes System besitzt, in Schritt a) weniger als 15,0kcal/mol $H_2$ beträgt.

**10.** Das Verfahren gemäß irgendeinem der Ansprüche 1 bis 9, wobei der Hydrierungskatalysator in Schritt a) und/oder der Dehydrierungskatalysator in Schritt b) ein Metall umfasst, ausgewählt aus der Gruppe bestehend aus Titan, Zirkonium, Kobalt, Niob, Tantal, Eisen, Molybdän, Quecksilber, Ruthenium, Rhodium, Iridium, Nickel, Palladium, und Platin.

**11.** Das Verfahren gemäß irgendeinem der Ansprüche 1 bis 10, wobei das Substrat, das ein ausgedehntes pi-konjugiertes System besitzt, und wenigstens teilweise hydrierte Substrats, das ein ausgedehntes pi-konjugiertes System besitzt, unter den Dehydrierungsbedingungen von Schritt b) Flüssigkeiten sind.

**12.** Ein Verfahren zur Speicherung von Wasserstoff, umfassend das Inkontaktbringen von Wasserstoffgas mit einem festen Substrat, das ein ausgedehntes pi-konjugiertes System besitzt, wie definiert in irgendeinem der Ansprüche

1 bis 5 in der Gegenwart einer wirksamen Menge eines Hydrierungskatalysators unter Hydrierungsbedingungen, so dass das Substrat, das ein ausgedehntes pi-konjugiertes System besitzt, wenigstens teilweise hydriert wird.

**13.** Das Verfahren gemäß Anspruch 12, wobei das Wasserstoffgas mit dem festen Substrat, das ein ausgedehntes pi-konjugiertes System besitzt, in Kontakt gebracht wird bei einem Wasserstoffpartialdruck von höher als etwa 6,7 bar und einer Temperatur zwischen etwa 50 °C und etwa 300 °C.

## Revendications

**1.** Procédé pour le stockage et la libération ultérieure d'hydrogène comprenant :

a) la mise en contact d'hydrogène, en présence d'un catalyseur d'hydrogénation dans des conditions d'hydrogénation, avec un substrat à conjugaison pi étendu pour effectuer le stockage d'hydrogène par formation d'un substrat à conjugaison pi étendu au moins partiellement hydrogéné ; le substrat à conjugaison pi étendu étant choisi dans le groupe constitué par les substrats à conjugaison pi étendus ayant des hétéroatomes d'azote comprenant (1) un hydrocarbure aromatique cyclique à cinq chaînons contenant un atome d'azote dans le cycle aromatique à cinq chaînons, ou (2) un hydrocarbure aromatique cyclique à six chaînons contenant un atome d'azote dans le cycle aromatique à six chaînons, la molécule hétérocyclique contenant de l'azote étant fusionnée à au moins une structure à sextet aromatique à six chaînons qui peut également contenir un hétéroatome d'azote ; les substrats monocycliques à conjugaison pi ayant de multiples hétéroatomes d'azote qui ont un cycle aromatique à cinq chaînons ou à six chaînons ayant deux atomes d'azote ou plus dans la structure de cycle aromatique, le cycle aromatique n'étant pas fusionné à un autre cycle aromatique ; et toute combinaison de ce qui précède ; et par la suite
b) la mise en contact du substrat à conjugaison pi étendu au moins partiellement hydrogéné dans des conditions de déshydrogénation en présence d'une quantité efficace d'un catalyseur de déshydrogénation pour libérer l'hydrogène à partir du substrat à conjugaison pi étendu au moins partiellement hydrogéné.

**2.** Procédé de la revendication 1, dans lequel le substrat à conjugaison pi étendu est un substrat à conjugaison pi étendu ayant des hétéroatomes d'azote choisi dans le groupe constitué par la phénanthroline, la quinoléine, le N-méthylindole, le 1,2-diméthylindole, le 1-éthyl-2-méthylindole ; le carbazole, le N-méthylcarbazole, le N-éthylcarbazole, le N-n-propylcarbazole, le N-iso-propylcarbazole ; l'acridine ; l'indolo[2,3-b]carbazole, l'indolo[3,2-a]carbazole, le 1,4,5,8,9,12-hexaazatriphénylène, la pyrazine[2,3-b]pyrazine, le N,N,N"-triméthyl-6,11-dihydro-5H-diindolo[2,3-a:2',3'-c]carbazole, le 1,7-dihydrobenzo[1,2-b:5,4-b']dipyrrole, le 4H-benzo[def]carbazole; et toute combinaison de deux ou plus de ce qui précède.

**3.** Procédé de la revendication 1, dans lequel le substrat à conjugaison pi étendu est un substrat monocyclique à conjugaison pi ayant de multiples hétéroatomes qui comprend deux hétéroatomes d'azote non adjacents ou plus.

**4.** Procédé de la revendication 1, dans lequel le substrat à conjugaison pi étendu ayant des hétéroatomes d'azote comprend des structures ayant un groupe cétone dans au moins une structure de cycle, la structure de cycle ayant le groupe cétone étant fusionnée à au moins une structure de cycle carbonée qui est un sextet aromatique, de préférence le substrat à conjugaison pi étendu étant la flavanthrone.

**5.** Procédé de la revendication 1, dans lequel le substrat à conjugaison pi étendu est un substrat monocyclique à conjugaison pi ayant de multiples hétéroatomes d'azote choisi dans le groupe constitué par la pyrazine, l'imidazole, le N-méthylimidazole ; et toute combinaison de ceux-ci.

**6.** Procédé de l'une quelconque des revendications 1 à 5, dans lequel le catalyseur d'hydrogénation fonctionne également en tant que catalyseur de déshydrogénation.

**7.** Procédé de l'une quelconque des revendications 1 à 6, dans lequel le substrat à conjugaison pi étendu à l'étape a) se trouve dans l'état liquide et à l'étape a) est amené dans un premier récipient ; et le substrat à conjugaison pi étendu au moins partiellement hydrogéné à l'étape b) se trouve dans l'état liquide et à l'étape b) est amené dans un second récipient.

**8.** Procédé de l'une quelconque des revendications 1 à 7, dans lequel l'étape b) est conduite à une température en dessous de 300 °C et à une pression partielle en hydrogène supérieure à 0,1 bar.

**9.** Procédé de l'une quelconque des revendications 1 à 8, dans lequel le module du changement d'enthalpie standard d'hydrogénation du substrat à conjugaison pi étendu à l'étape a) est inférieur à 15,0 kcal/mol $H_2$.

**10.** Procédé de l'une quelconque des revendications 1 à 9, dans lequel le catalyseur d'hydrogénation à l'étape a) et/ou le catalyseur de déshydrogénation à l'étape b) comprend un métal choisi dans le groupe constitué par le titane, le zirconium, le cobalt, le niobium, le tantale, le fer, le molybdène, le tungstène, le ruthénium, le rhodium, l'iridium, le nickel, le palladium et le platine.

**11.** Procédé de l'une quelconque des revendications 1 à 10, dans lequel le substrat à conjugaison pi étendu et le substrat à conjugaison pi étendu au moins partiellement hydrogéné sont des liquides dans les conditions de déshydrogénation de l'étape b).

**12.** Procédé pour le stockage d'hydrogène comprenant la mise en contact d'hydrogène gazeux avec un substrat à conjugaison pi étendu solide tel que défini dans l'une quelconque des revendications 1 à 5 en présence d'une quantité efficace d'un catalyseur d'hydrogénation dans des conditions d'hydrogénation pour au moins partiellement hydrogéner le substrat à conjugaison pi étendu.

**13.** Procédé de la revendication 12, dans lequel l'hydrogène gazeux est mis en contact avec le substrat à conjugaison pi étendu solide à une pression partielle en hydrogène supérieure à environ 6,7 bar et à une température entre environ 50 °C et environ 300 °C.

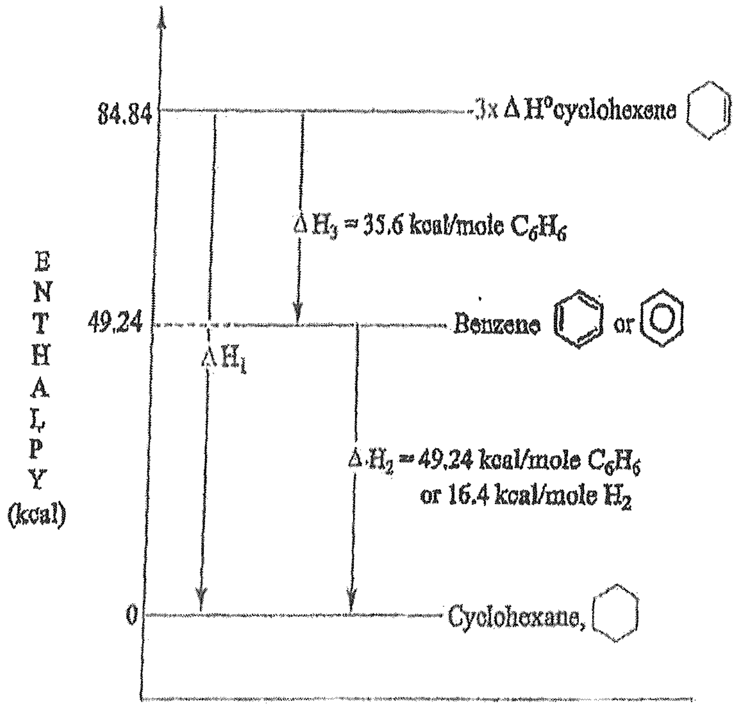
84.84
3x ΔH°cyclohexene
ΔH3 = 35.6 kcal/mole C6H6
49.24
Benzene
or
ΔH1
ΔH2 = 49.24 kcal/mole C6H6
or 16.4 kcal/mole H2
0
Cyclohexane,
ENTHALPY
(kcal)

*Fig. 1*

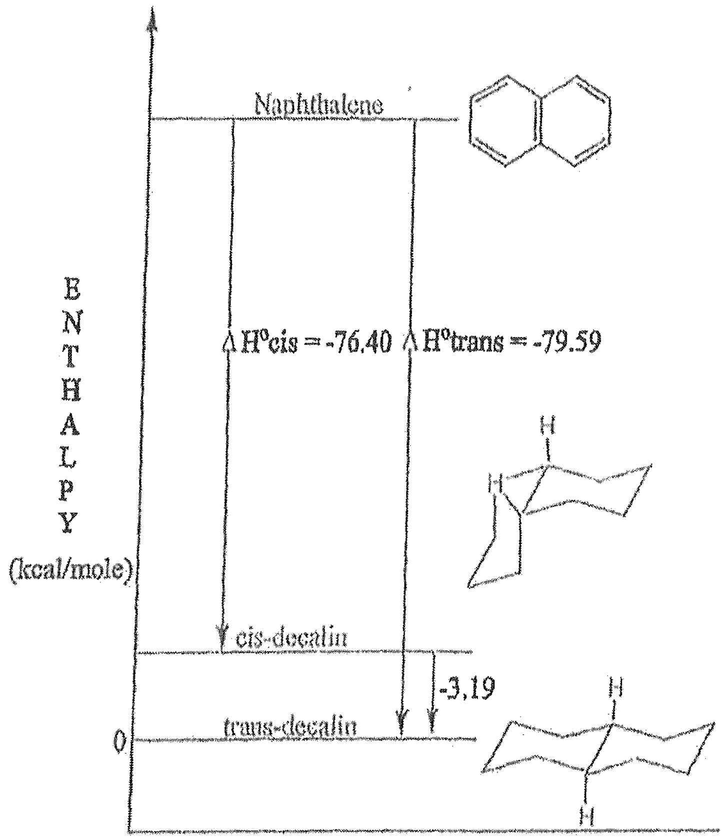
ENTHALPY
(kcal/mole)
Naphthalene
ΔH°cis = -76.40
ΔH°trans = -79.59
cis-decalin
-3.19
trans-decalin
0

*Fig. 2*

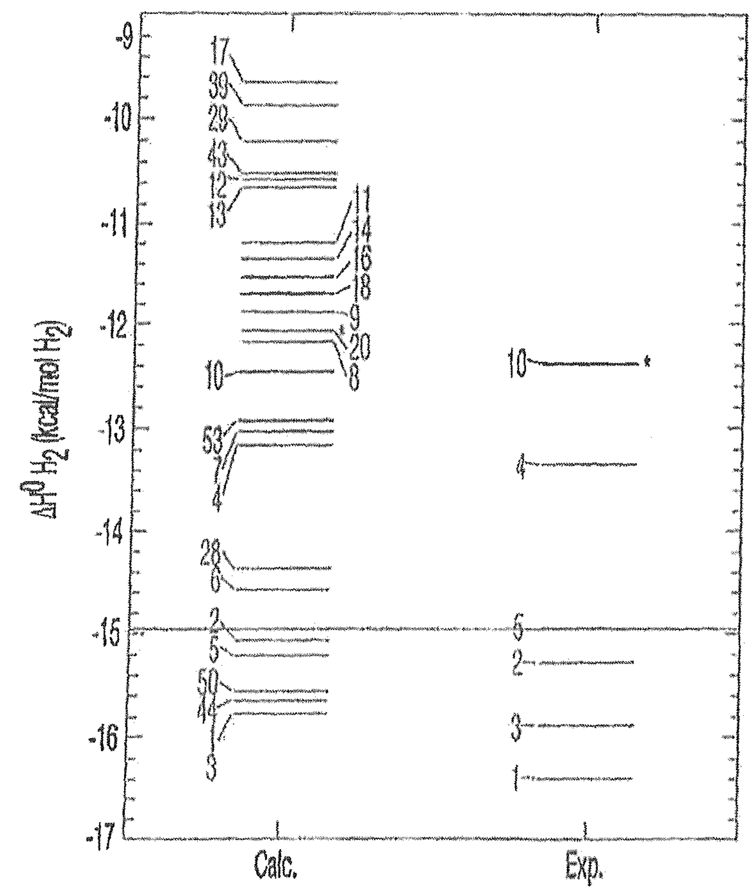
$\Delta H^0$ $H_2$ (kcal/mol $H_2$)
-9
-10
-11
-12
-13
-14
-15
-16
-17
Calc.
Exp.
17
39
29
43
12
13
11
14
16
18
9
20
8
10
53
7
4
28
6
2
5
50
44
1
3
10
4
6
2
3
1

Fig. 3

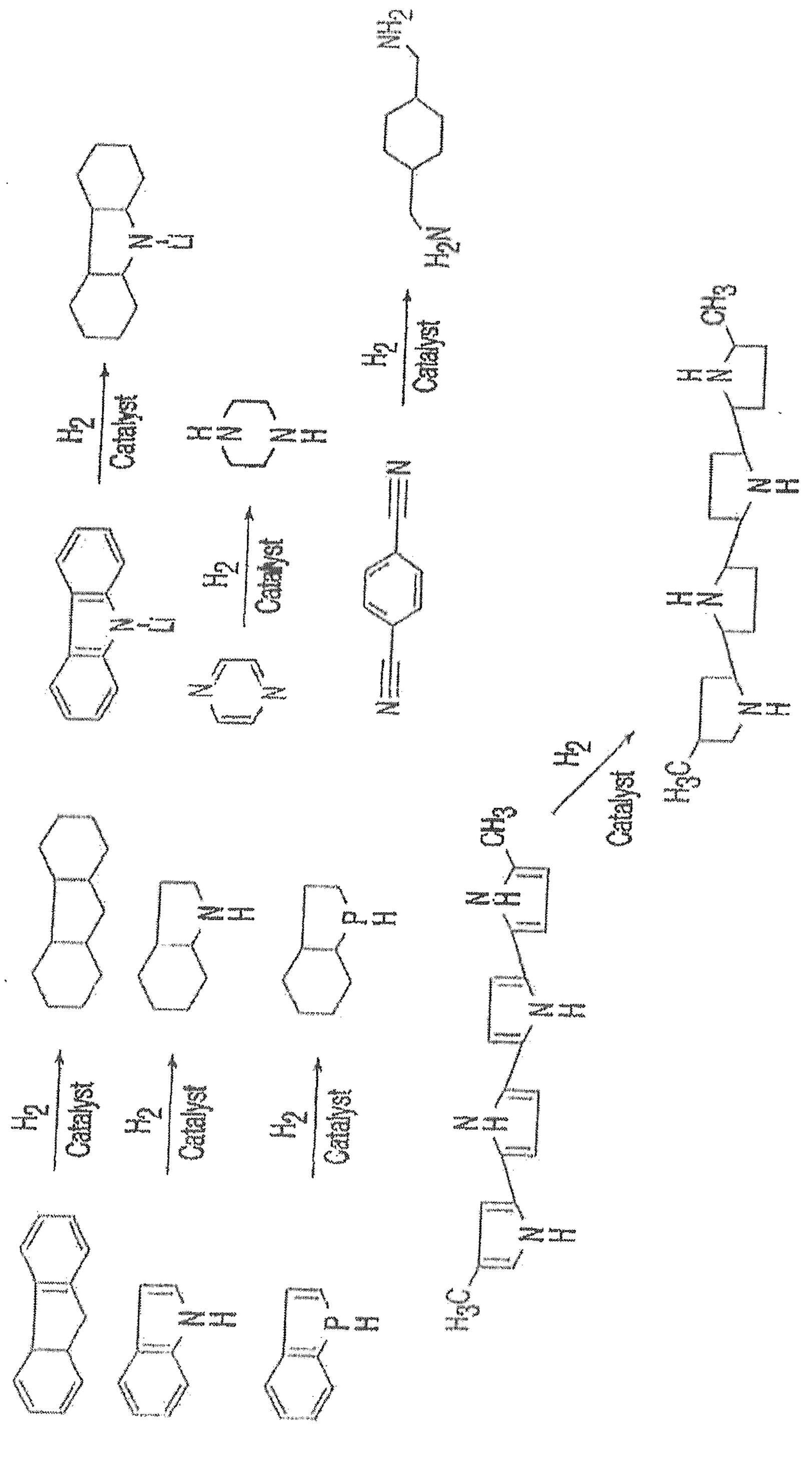
$H_2$
Catalyst
$H_2$
Catalyst
$H_2$
Catalyst
$H_2$
Catalyst
$H_2$
Catalyst
$H_2$
Catalyst
$H_2$
Catalyst

*Fig. 4*

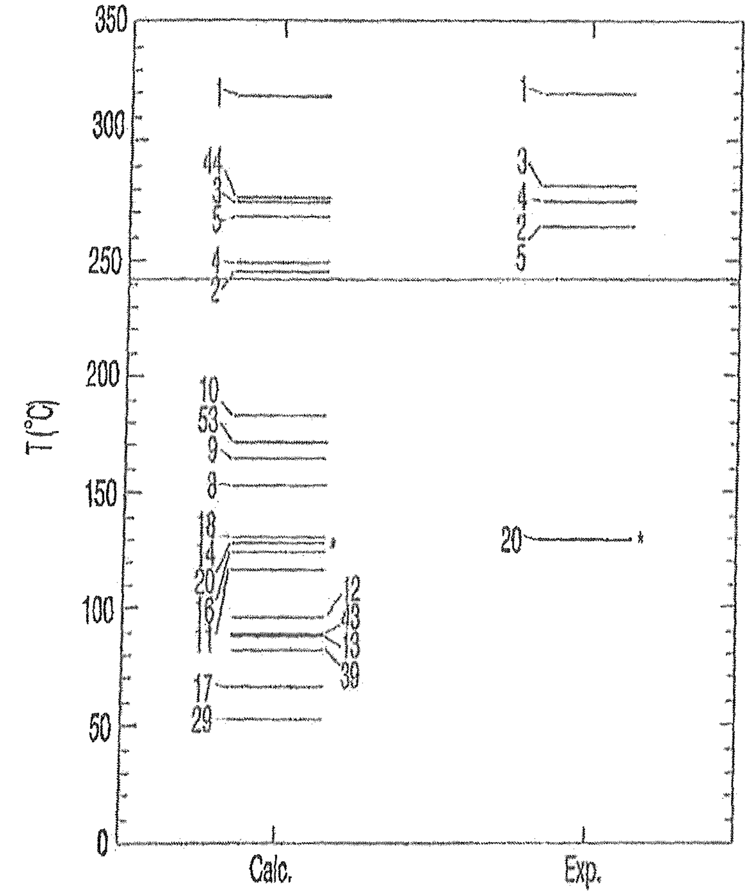
350
300
250
200
150
100
50
0
T(°C)
1
44
3
5
4
2
10
53
9
8
18
14
20
16
11
12
43
13
39
17
29
1
3
4
2
5
20
Calc.
Exp.

*Fig. 5*

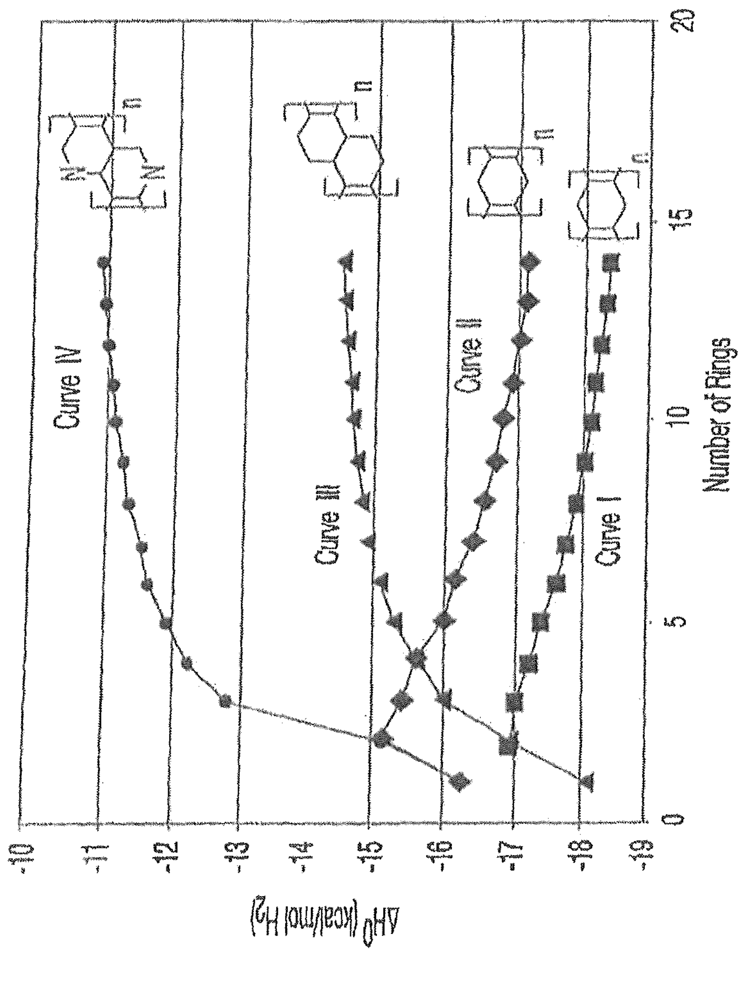

ΔH° (kcal/mol H2)
-10
-11
-12
-13
-14
-15
-16
-17
-18
-19
Number of Rings
0
5
10
15
20
Curve IV
Curve III
Curve II
Curve I
n


*Fig. 7*

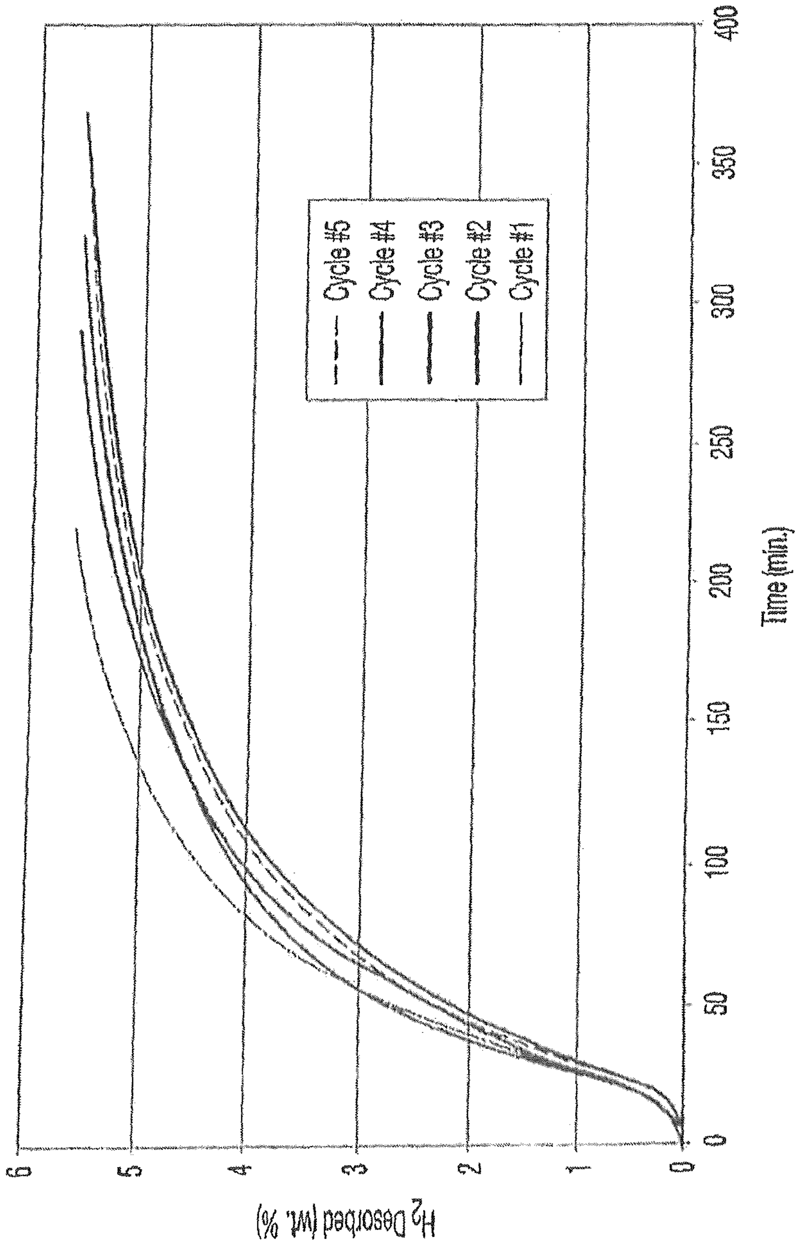
$H_2$ Desorbed (wt. %)
Time (min.)
Cycle #5
Cycle #4
Cycle #3
Cycle #2
Cycle #1
0
1
2
3
4
5
6
0
50
100
150
200
250
300
350
400

*Fig. 13*

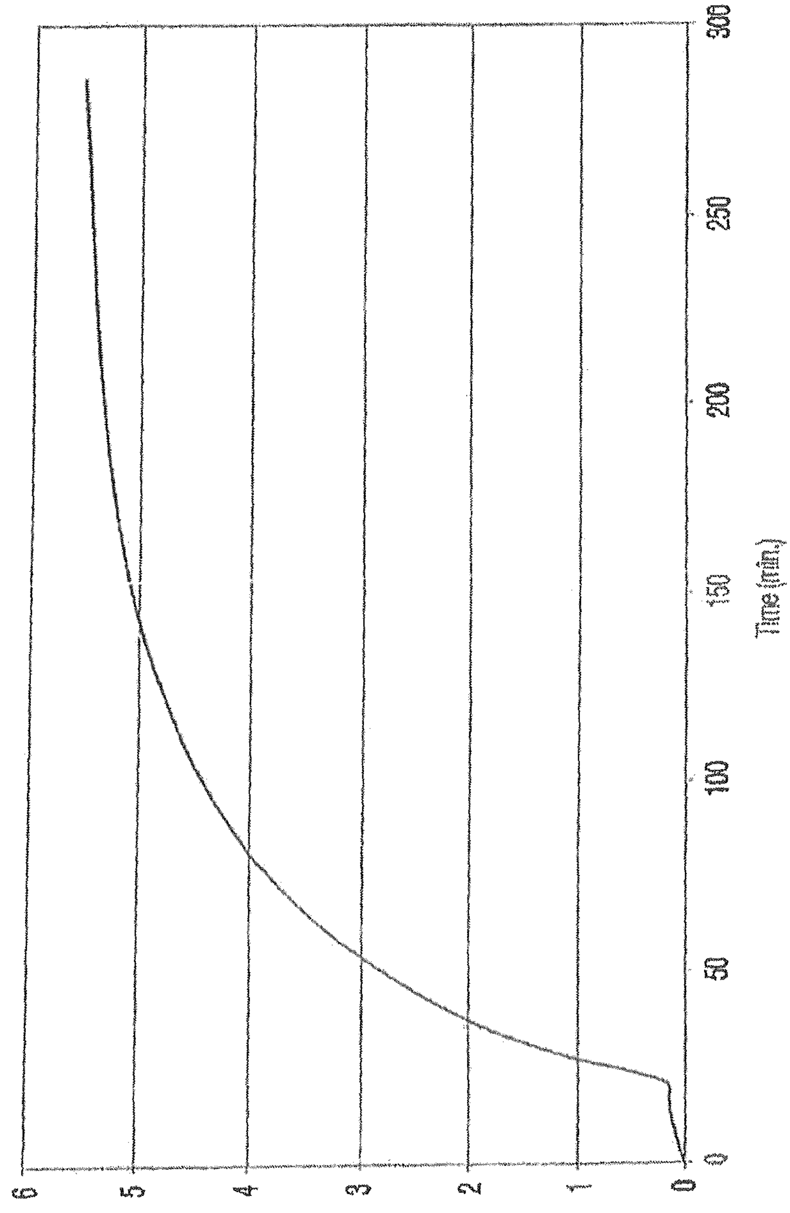


*Fig. 14*

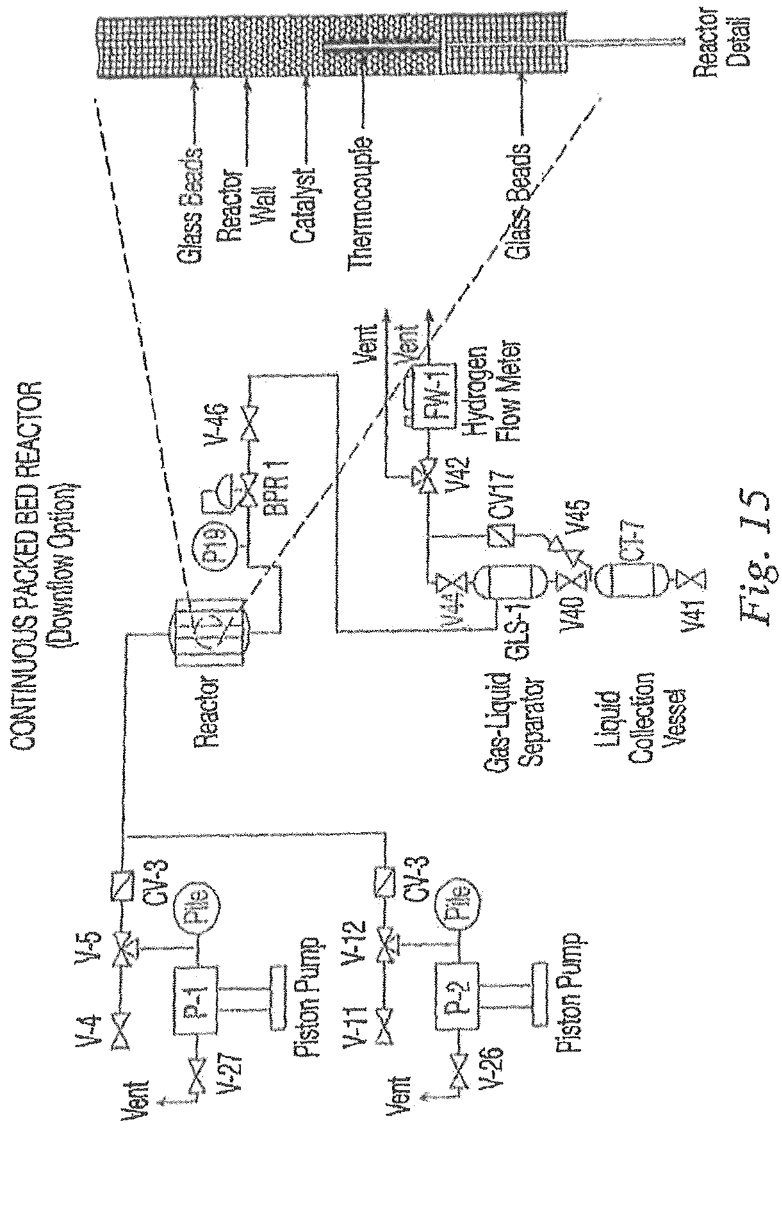
CONTINUOUS PACKED BED REACTOR
(Downflow Option)
Reactor
P19
BPR 1
V-46
Vent
Vent
FM-1
Hydrogen
Flow Meter
V42
CV17
V45
V44
GLS-1
V40
CT-7
V41
Gas-Liquid
Separator
Liquid
Collection
Vessel
Glass Beads
Reactor
Wall
Catalyst
Thermocouple
Glass Beads
Reactor
Detail
V-4
V-5
CV-3
P-1
V-27
Vent
Piston Pump
V-11
V-12
CV-3
P-2
V-26
Vent
Piston Pump

*Fig. 15*

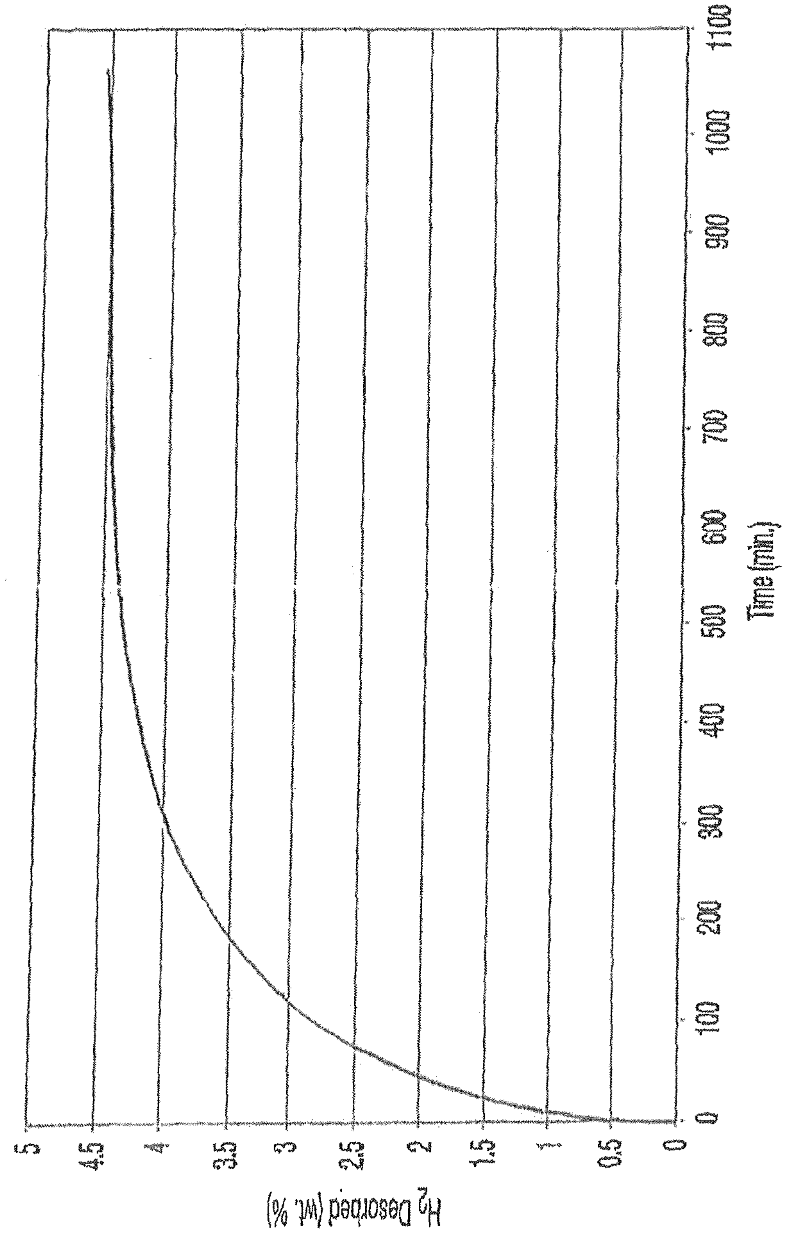
H2 Desorbed (wt. %)
0
0.5
1
1.5
2
2.5
3
3.5
4
4.5
5
0
100
200
300
400
500
600
700
800
900
1000
1100
Time (min.)

*Fig. 16*

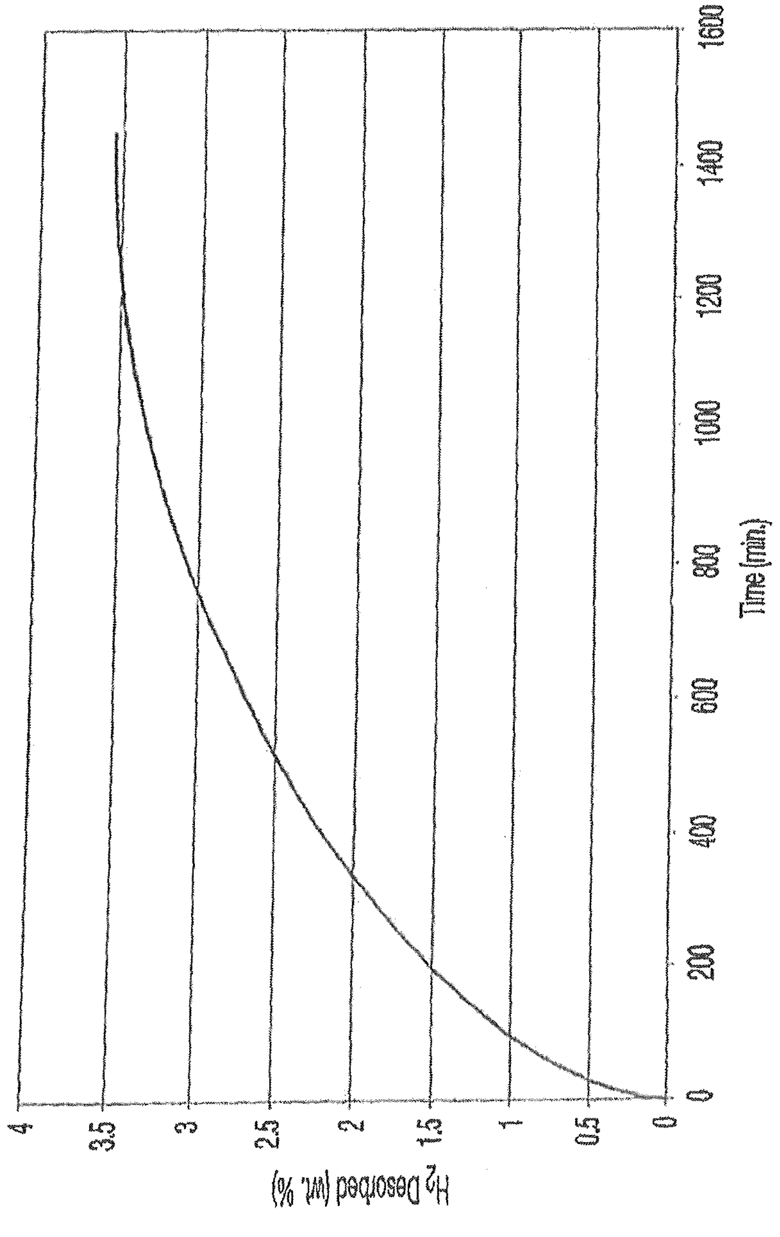
H2 Desorbed (wt. %)
0
0.5
1
1.5
2
2.5
3
3.5
4
Time (min.)
0
200
400
600
800
1000
1200
1400
1600

*Fig. 17*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020096048 A, Cooper and Pez
- US 4567033 A, Kesten
- US 6074447 A, Jensen
- JP 20001110437 B
- JP 2002134141 B
- JP 2002134141 A


### Non-patent literature cited in the description


- **A. C. DILLON et al.** *Nature,* 1997, vol. 386, 377-379
- **CHAMBERS et al.** *J. Phys. Chem. B,* 1998, vol. 102, 4253-4256
- **A. C. DILLON ; M. J. HEBEN.** *Appl. Phys. A,* 2001, vol. 72, 133-142
- **S. J. CHO et al.** *ACS Fuel Chemistry Division Preprints,* 2002, vol. 47 (2), 790-791
- **N. KARIYA et al.** *Applied Catalysis A,* 2002, vol. 233, 91-102
- **R.O. LOUFTY ; E.M. VEKSTER.** Investigation of Hydrogen Storage in Liquid Organic Hydrides. *Proceedings of the International Hydrogen Energy Forum 2000,* 2000, 335-340
- *Chem. Eng.,* March 2003, vol. 21
- **G. PEZ.** Toward New Solid and Liquid Phase Systems for the Containment. *Transport and Deliver of Hydrogen,* May 2003, http://www.eere.energy.gov/hydrogenandfuelcells/pdfs/solid_liquid_carriers_pres_air_pro d.pdf
- **S. HODOSHIMA et al.** *Int. J. Hydrogen Energy,* 2003, vol. 28, 1255-1262
- **E. NEWSOME et al.** *Int. J. Hydrogen Energy,* 1998, vol. 23, 905-909
- **D. YOUNG.** Computational Chemistry - A Practical Guide for Applying Techniques to Real World Problems. Wiley - Interscience, 2001
- *Tetrahedron,* 1999, vol. 55, 2371
- **PASCAL.** *Bull.Soc.Chim.Fr.,* 1921, 648
- **I. MOCHIDA et al.** *Carbon,* 2000, vol. 28, 305-328
- **P. V. RYABCHENKO et al.** *Khimiya Tverdogo Topliva,* 1985, vol. 19, 129-134
- *J. Org. Chem.,* 1980, vol. 4, 2797
- **HODOSHIMA et al.** *Int. J. Hydrogen Energy,* 2003, vol. 28, 1255-1262